(19) **Europäisches Patentamt / European Patent Office / Office européen des brevets**

(11) **EP 3 832 952 A1**

(12) **EUROPEAN PATENT APPLICATION**
published in accordance with Art. 153(4) EPC

(43) Date of publication:
09.06.2021 Bulletin 2021/23

(51) Int Cl.:
**H04L 12/24** (2006.01)

(21) Application number: 19855257.2

(22) Date of filing: 28.08.2019

(86) International application number:
**PCT/CN2019/102985**

(87) International publication number:
**WO 2020/043120 (05.03.2020 Gazette 2020/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: 31.08.2018 CN 201811012109

(71) Applicant: HUAWEI TECHNOLOGIES CO., LTD.
Shenzhen, Guangdong 518129 (CN)

(72) Inventors:
• **DONG, Wenxia**
Shenzhen, Guangdong 518129 (CN)

• **HOU, Jie**
Shenzhen, Guangdong 518129 (CN)
• **SONG, Yuezhong**
Shenzhen, Guangdong 518129 (CN)
• **DAI, Longfei**
Shenzhen, Guangdong 518129 (CN)

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND APPARATUS FOR DIVIDING INTERNAL GATEWAY PROTOCOL DOMAIN IN NETWORK**

(57) A solution for obtaining an interior gateway protocol IGP domain through division in a network is provided. The network includes an access site link and a non-access site link. The access site link includes a link between access site devices and a link between an access site device and an aggregation site device. The non-access site link includes a link other than the access site link in the network. In this solution, a network device determines a changed access site subgraph based on a change of a network topology of the network, and obtains an IGP domain through division based on a link in the changed access site subgraph. The access site subgraph is one or more connection diagrams formed after the non-access site link is removed from the network topology. This solution can improve efficiency of IGP domain division.

FIG. 4

## Description

This application claims priority to Chinese Patent Application No. CN 201811012109.1, filed on August 31, 2018 and entitled "METHOD AND APPARATUS FOR OBTAINING INTERIOR GATEWAY PROTOCOL DOMAIN THROUGH DIVISION IN NETWORK", which is incorporated herein by reference in its entirety.

## TECHNICAL FIELD

This application relates to the field of network technologies, and in particular, to a method and an apparatus for obtaining an interior gateway protocol domain through division in a network.

## BACKGROUND

With the development of network technologies, a scale of a bearer network increases significantly. For example, an Internet protocol (Internet Protocol, IP) radio access network (Radio Access Network, RAN) may include tens of thousands of network nodes. Due to protocol limitation from an interior gateway protocol (Interior Gateway Protocol, IGP), one network is usually divided into a plurality of IGP domains. If a network includes a large quantity of network nodes, it may be very difficult to manually divide the network into IGP domains. Therefore, in the prior art, a method for automatically dividing a network into IGP domains is used. In this method, a coupling relationship between global network nodes and a quantity of common edges between rings formed by the network nodes are analyzed to combine and divide network areas, thereby obtaining an IGP domain with an appropriate size. Because an algorithm used in the prior art is used for division based on a relationship between all network nodes in a network, when network expansion or adjustment occurs subsequently, calculation and division need to be performed for all the network nodes in the network again, which is obviously inappropriate. Therefore, the existing solution is only applicable to a scenario of initial network planning. For subsequent network expansion or adjustment, domain division and adjustment can be only completed still manually. This results in high maintenance overheads and low efficiency in IGP domain division.

## SUMMARY

This application provides a method and an apparatus for obtaining an interior gateway protocol IGP domain through division in a network, to resolve a prior-art problem of high maintenance overheads due to network expansion or adjustment.

To achieve the foregoing objectives, the following technical solutions are used in this application:

According to a first aspect, an embodiment of this application provides a method for obtaining an interior gateway protocol IGP domain through division in a network. The method may be applied to a bearer network such as an IP RAN. The network may include an access site link and a non-access site link. The access site link includes a link between access site devices and a link between an access site device and an aggregation site device. The non-access site link includes a link other than the access site link in the network. An execution process of the method is as follows: obtaining, by a network device, an IPG domain through division based on a link in an access site subgraph changed due to a change of a network topology of the network. The access site subgraph is one or more connection diagrams formed after the non-access site link is removed from the network topology.

In this embodiment of this application, a subgraph is used as a basic computing unit. When the network topology changes, only the subgraph within a change range may be included in a range of IGP redivision, thereby reducing complexity of obtaining an IGP domain through redivision in a process of network expansion or adjustment, and implementing automatic domain division in a network change. In this way, efficiency of obtaining an IGP domain through division is improved, and maintenance overheads are reduced.

In a possible implementation, that the network device determines the changed access site subgraph based on the change of the network topology includes: determining, by the network device, the changed access site device based on the network topology; obtaining an access site subgraph in which the changed access site device is located; and then determining, as the changed access site subgraph, the access site subgraph in which the changed access site device is located.

In this embodiment of this application, the changed access site device is used as a basis for determining the changed access site subgraph, and then the IGP domain is obtained through division based on the changed access site subgraph. The IGP domain may be obtained through division in an appropriate range, instead of being obtained through redivision in a larger range, thereby obtaining better efficiency and effects in obtaining the IGP domain through division.

In a possible implementation, the obtaining an IGP domain through division based on a link in a changed access site subgraph includes: searching the changed access site subgraph for a valid access ring and a chain that does not belong to any access ring, where the access ring is a path whose start point and end point in the access site subgraph are both an aggregation site device, the valid access ring is an access ring whose link quantity or node quantity does not exceed a limited threshold N of the IGP domain, and N is an integer greater than 1; allocating a link in the valid access ring to an atomic domain based on a ring in which the link is located; allocating a link in the chain that does not belong to any access ring, to an atomic domain based on a chain in which the link is located; and obtaining the IGP domain based on the atomic domain, where the atomic domain is a minimum unit for forming an IGP domain.

In this embodiment of this application, the valid access ring is set, so that the IGP domain obtained through division based on the valid access ring directly meets a requirement of the IGP domain on the link quantity or the node quantity. This avoids a case in which a new IGP domain obtained through division is invalid because the new IGP domain does not meet the requirement of the link quantity or the node quantity, and redivision needs to be performed for the IGP domain. In this way, efficiency of IGP domain division is improved.

In a possible implementation, the performing allocation to an atomic domain based on a ring in which the link is located includes: obtaining a union set of links in all valid access rings in the changed access site subgraph, and traversing the links in the union set; and when the link does not belong to any atomic domain, calculating, by using a pre-constructed evaluation function, a valid access ring including the link, selecting, as an atomic domain based on a calculation result of the evaluation function, one valid access ring including the link, and adding the atomic domain to an atomic domain set; or when the link has been added to at least one atomic domain, continuing to traverse a next link until the atomic domain set includes all the links in the union set, where the atomic domain set is a set of atomic domains.

In a possible implementation, the selecting, as an atomic domain based on a calculation result of the evaluation function, one valid access ring including the link, and adding the atomic domain to an atomic domain set includes: selecting, as the atomic domain based on the calculation result of the evaluation function, a valid access ring that has a minimum or maximum value of the evaluation function, and adding the atomic domain to the atomic domain set.

In a possible implementation, the method further includes: constructing or adjusting the evaluation function in advance based on a division requirement of a user.

In this embodiment of this application, the evaluation function is introduced for calculation for atomic domain division. In this way, the user such as an operator may adjust a final division result by adjusting a calculation algorithm of the evaluation function, to adapt to different service requirements, thereby improving flexibility of IGP domain division.

In a possible implementation, if the chain that does not belong to any access ring is an aggregation site device chain, and the aggregation site device chain is a chain including an aggregation site device, performing allocation to the atomic domain based on a type of the chain in which the link is located is specifically: directly using the aggregation site device chain as an atomic domain.

In a possible implementation, if the chain that does not belong to any access ring is an access site device chain, and the access site device chain is a chain that does not include an aggregation site device, performing allocation to the atomic domain based on the type of the chain in which the link is located includes: searching the atomic domain set for a valid access ring intersected with the access site device chain; and if the valid access ring intersected with the access site device chain is found, and a total quantity of links of the found valid access ring and the access site device chain does not exceed a link threshold N of the IGP domain, forming the atomic domain by using the access site device chain and the found valid access ring; or if no valid access ring intersected with the access site device chain is found, or a total quantity of links of the found valid access ring and the access site device chain exceeds a link threshold N of the IGP domain, forming the atomic domain by using the access site device chain and a path from a head node of the access site device chain to a nearest aggregation site device through the access site link, where N is an integer greater than 1.

In a possible implementation, if the chain that does not belong to any access ring is an access site device chain, and the access site device chain is a chain that does not include an aggregation site device, performing allocation to the atomic domain based on the type of the chain on which the link is located includes: searching the atomic domain set for a valid access ring intersected with the access site device chain; and if the valid access ring intersected with the access site device chain is found, and a total quantity of nodes of the found valid access ring and the access site device chain does not exceed a node threshold N of the IGP domain, forming the atomic domain by using the access site device chain and the found valid access ring; or if no valid access ring intersected with the access site device chain is found, or a total quantity of links of the found valid access ring and the access site device chain exceeds a node threshold N of the IGP domain, forming the atomic domain by using the access site device chain and a path from a head node of the access site device chain to a nearest aggregation site device through the access site link, where N is an integer greater than 1.

In this embodiment of this application, IGP domain division is performed based on different types of chains with reference to a requirement of IGP domain division on a total quantity of links or nodes, to make the IGP domain division more appropriate and effective.

In a possible implementation, the obtaining the IGP domain based on the atomic domain includes: based on the requirement for the IGP domain division, using one atomic domain as one IGP domain, or combining, to one IGP domain, at least two atomic domains whose total quantity of links does not exceed the link threshold N, or combining, to one IGP domain, at least two atomic domains whose total quantity of nodes does not exceed the node threshold N.

In this embodiment, based on different requirements for the IGP domain division in practice, a flexible division manner may be used. The division manner may be that one atomic domain is one IGP domain, or a plurality of atomic domains are combined to one IGP domain. In addition, the requirement for the total quantity of links or the total quantity of nodes in the IGP domain is considered, to make the IGP division manner flexible and effective.

In a possible implementation, based on the foregoing designs, the method further includes the following processing: after the IGP domain division, allocating a domain number to the new IGP domain obtained through division. Specifically, in a process of allocating a domain number, for an IGP domain that includes a link carrying a historical domain number, the historical domain number in the new IGP domain obtained through division may be preferentially used as an idle number for reallocation; for an IGP domain that does not include a link carrying a historical domain number, a new domain number is directly allocated to the IGP domain.

In this embodiment of this application, the domain number is automatically instead of manually allocated to the new IGP domain obtained through division, thereby improving efficiency of allocating a domain number. In addition, in this embodiment of this application, the historical domain number in the link in the IGP domain is fully used in the process of allocating a domain number, thereby saving domain number resources and improving network stability to some extent.

In a possible implementation, in a process of reallocating the historical domain number that is in the new IGP domain obtained through division and that is used as the idle number, reallocation is performed based on a quantity of links whose domain numbers need to be adjusted.

In this embodiment of this application, whether to reallocate a domain number is determined based on the quantity of links whose domain numbers need to be changed, so that the domain numbers in the links are not greatly changed as much as possible, thereby saving domain number resources and improving network stability to some extent.

In a possible implementation, preferentially using the historical domain number in the new IGP domain obtained through division as the idle number for reallocation includes: dividing, into at least one association domain set, the new IGP domain obtained through division, where IGP domains with an association relationship are added to an association domain set, and the association relationship is that one IGP domain and another IGP domain include at least one same idle domain number; then, obtaining an idle domain number set of the association domain set, and reallocating, to an IGP domain in the association domain set based on the quantity of links whose domain numbers need to be adjusted, an idle domain number from the idle domain number set of the association domain set; and when the idle domain numbers in the idle domain number set are insufficient for allocation, allocating a new domain number to an IGP domain to which no idle domain number is allocated in the association domain set.

In this embodiment of this application, when there are a plurality of IGP domains having a same idle domain number, for example, every two IGP domains have a same idle domain number, domain numbers are allocated in comprehensive consideration of a domain number condition in the plurality of IGP domains, thereby minimizing a quantity of links whose domain numbers need to be changed in the process of allocating a domain number.

In a possible implementation, the reallocating, to an IGP domain in the association domain set based on the quantity of links whose domain numbers need to be adjusted, an idle domain number from the idle domain number set of the association domain set includes: determining a quantity of allocation manners based on a quantity of elements in the association domain set and a quantity of elements in the idle domain number set; and when the quantity of allocation manners is less than a preset allocation manner threshold Q, selecting a manner in which the quantity of links whose domain numbers are to be modified in the association domain set is minimized, to perform allocation; or when the quantity of allocation manners is greater than or equal to a preset allocation manner threshold Q, selecting, based on each IGP domain in the association domain set, a manner in which a quantity of links whose domain numbers are to be modified in each IGP domain is minimized, to perform allocation, where Q is an integer greater than 1. In a possible implementation, the access site device is a cell site gateway CSG, and the aggregation site device is an aggregation site gateway ASG.

In this embodiment of this application, a specified threshold condition is set. In this way, when there are excessive allocation manners, the domain number is allocated based on a single IGP domain; and when there is a relatively appropriate quantity of allocation manners, the domain numbers are allocated based on a plurality of IGP domains. Therefore, the foregoing benefits of allocating domain numbers based on a plurality of IGP domains can be obtained, and calculation complexity and time consumption brought due to domain number allocation based on the plurality of IGP domains when there are excessive allocation manners can be avoided, thereby improving efficiency and scientificity of allocating a domain number.

According to a second aspect, an embodiment of this application provides a method for obtaining an interior gateway protocol IGP domain through division in a network. In this method, a network device performs IGP domain division in a changed network based on a network topology. After the IGP domain division, the network allocates a domain number to a new IGP domain obtained through division. In a process of allocating a domain number, for an IGP domain that includes a link carrying a historical domain number, the historical domain number in the new IGP domain obtained through division may be preferentially used as an idle number for reallocation; for an IGP domain that does not include a link carrying a historical domain number, a new domain number is directly allocated to the IGP domain.

In this embodiment of this application, the domain number is automatically instead of manually allocated to the new IGP domain obtained through division, thereby improving efficiency of allocating a domain number. In addition, in this embodiment of this application, the historical domain number in the link in the IGP domain is fully used in the process of allocating a domain number, thereby saving domain number resources and improving network stability to some extent.

In a possible implementation, in a process of reallocating the historical domain number that is in the new IGP domain obtained through division and that is used as the idle number, reallocation is performed based on a quantity of links whose domain numbers need to be adjusted.

In this embodiment of this application, whether to reallocate a domain number is determined based on the quantity of links whose domain numbers need to be changed, so that the domain numbers in the links are not greatly changed as much as possible, thereby saving domain number resources and improving network stability to some extent.

In a possible implementation, preferentially using the historical domain number in the new IGP domain obtained through division as the idle number for reallocation includes: dividing, into at least one association domain set, the new IGP domain obtained through division, where IGP domains with an association relationship are added to an association domain set, and the association relationship is that one IGP domain and another IGP domain include at least one same idle domain number; obtaining an idle domain number set of the association domain set; reallocating, to an IGP domain in the association domain set based on the quantity of links whose domain numbers need to be adjusted, an idle domain number from the idle domain number set of the association domain set; and when the idle domain numbers in the idle domain number set are insufficient for allocation, allocating a new domain number to an IGP domain to which no idle domain number is allocated in the association domain set.

In this embodiment of this application, when there are a plurality of IGP domains having a same idle domain number, for example, every two IGP domains have a same idle domain number, domain numbers are allocated in comprehensive consideration of a domain number condition in the plurality of IGP domains, thereby minimizing a quantity of links whose domain numbers need to be changed in the process of allocating a domain number.

In a possible implementation, the reallocating, to an IGP domain in the association domain set based on the quantity of links whose domain numbers need to be adjusted, an idle domain number from the idle domain number set of the association domain set includes: determining a quantity of allocation manners based on a quantity of elements in the association domain set and a quantity of elements in the idle domain number set; and when the quantity of allocation manners is less than a preset allocation manner threshold Q, selecting a manner in which the quantity of links whose domain numbers are to be modified in the association domain set is minimized, to perform reallocation; or when the quantity of allocation manners is greater than or equal to a preset allocation manner threshold Q, selecting, based on each IGP domain in the association domain set, a manner in which a quantity of links whose domain numbers are to be modified in each IGP domain is minimized, to perform reallocation.

In this embodiment of this application, a specified threshold condition is set. In this way, when there are excessive allocation manners, the domain number is allocated based on a single IGP domain; and when there is a relatively appropriate quantity of allocation manners, the domain numbers are allocated based on a plurality of IGP domains. Therefore, the foregoing benefits of allocating domain numbers based on a plurality of IGP domains can be obtained, and calculation complexity and time consumption brought due to domain number allocation based on the plurality of IGP domains when there are excessive allocation manners can be avoided, thereby improving efficiency and scientificity of allocating a domain number. According to a third aspect, an embodiment of this application provides an apparatus for obtaining an interior gateway protocol IGP domain through division in a network. The network includes an access site link and a non-access site link. The access site link includes a link between access site devices and a link between an access site device and an aggregation site device. The non-access site link includes a link other than the access site link in the network. The apparatus includes a determining unit and a division unit. The determining unit is configured to determine a changed access site subgraph, where the access site subgraph is one or more connection diagrams formed after the non-access site link is removed from a network topology. The division unit is configured to perform IGP domain division based on a link in the changed access site subgraph.

In this embodiment of this application, a subgraph is used as a basic computing unit. When the network topology changes, only the subgraph within a change range may be included in a range of IGP redivision, thereby reducing complexity of obtaining an IGP domain through redivision in a process of network expansion or adjustment, and implementing automatic domain division in a network change. In this way, maintenance overheads are reduced.

In a possible implementation, when the access site device is a cell site gateway CSG, the determining unit is specifically configured to: determine a changed CSG node based on a change of the network topology of the network; obtain an access site subgraph in which the changed CSG is located; and then determine, as the changed access site subgraph, the access site subgraph in which the changed CSG node is located.

In this embodiment of this application, the changed access site device such as a CSG is used as a basis for determining the changed access site subgraph, and then the IGP domain is obtained through division based on the changed access site subgraph. The IGP domain may be obtained through division in an appropriate range, instead of being obtained through redivision in a larger range, thereby obtaining better efficiency and effects in obtaining the IGP domain through division.

In a possible implementation, the aggregation site device is an aggregation site gateway ASG. Correspondingly, that the division unit performs IGP domain division based on the link in the changed access site subgraph may specifically include that the division unit is configured to: search the changed access site subgraph for a valid access ring and a chain that does not belong to any access ring; allocate a link in the valid access ring to an atomic domain based on a ring in which the link is located; allocate a link in the chain that does not belong to any access ring, to an atomic domain based on a chain in which the link is located; and obtain the IPG domain based on the atomic domain, where the atomic domain is a minimum unit for forming an IGP domain. The access ring is a path whose start point and end point are both an ASG. The valid access ring is an access ring whose link quantity does not exceed a limited threshold N of the IGP domain, where N is an integer greater than 1.

In this embodiment of this application, the valid access ring is set, so that the IGP domain obtained through division based on the valid access ring directly meets a requirement of the IGP domain on the link quantity or the node quantity. This avoids a case in which a new IGP domain obtained through division is invalid because the new IGP domain does not meet the requirement of the link quantity or the node quantity, and redivision needs to be performed for the IGP domain. In this way, efficiency of IGP domain division is improved.

In a possible implementation, that the division unit performs allocation to the atomic domain based on the ring in which the link is located may specifically include that the division unit obtains a union set of links in all valid access rings in the changed access site subgraph, and traverses the links in the union set; and when the link does not belong to any atomic domain, calculates, by using a pre-constructed evaluation function, a valid access ring including the link, selects, as an atomic domain based on a calculation result of the evaluation function, one valid access ring including the link, and adds the atomic domain to an atomic domain set; or when the link has been added to at least one atomic domain, continues to traverse a next link until the atomic domain set includes all the links in the union set. The atomic domain set is a set of atomic domains.

In a possible implementation, that the division unit selects, as the atomic domain based on the calculation result of the evaluation function, the valid access ring including the link, and adds the atomic domain to the atomic domain set may specifically include that the division unit selects, as the atomic domain based on the calculation result of the evaluation function, a valid access ring that has a minimum or maximum value of the evaluation function, and adds the atomic domain to the atomic domain set.

In a possible implementation, the division unit may further construct or adjust the evaluation function based on a division requirement of a user.

In this embodiment of this application, the evaluation function is introduced for calculation for atomic domain division. In this way, the user such as an operator may adjust a final division result by adjusting a calculation algorithm of the evaluation function, to adapt to different service requirements, thereby improving flexibility of IGP domain division.

In a possible implementation, if the chain that does not belong to any access ring is an aggregation site device chain, and the aggregation site device chain is a chain including an aggregation site device, that the division unit is configured to perform allocation to the atomic domain based on a type of the chain in which the link is located may be specifically that the division unit directly uses the ASG chain as an atomic domain.

In a possible implementation, if the chain that does not belong to any access ring is an access site device chain, and the access site device chain is a chain that does not include an aggregation site device, that the division unit is configured to perform allocation to the atomic domain based on the type of the chain on which the link is located may specifically include that the division unit searches the atomic domain set for a valid access ring intersected with the access site device chain; and if the valid access ring intersected with the access site device chain is found, and a total quantity of links of the found valid access ring and the access site device chain does not exceed a limited threshold N of the IGP domain, for example, a link threshold N, forms the atomic domain by using the access site device chain and the found valid access ring; or if no valid access ring intersected with the access site device chain is found, or a total quantity of links of the found valid access ring and the access site device chain exceeds a limited threshold N of the IGP domain, for example, a link threshold N, forms the atomic domain by using the access site device chain and a path from a head node of the access site device chain to a nearest ASG through the access site link, where N is an integer greater than 1.

In a possible implementation, if the chain that does not belong to any access ring is an access site device chain, and the access site device chain is a chain that does not include an aggregation site device, that the division unit is configured to perform allocation to the atomic domain based on the type of the chain on which the link is located may specifically include that the division unit searches the atomic domain set for a valid access ring intersected with the access site device chain; and if the valid access ring intersected with the access site device chain is found, and a total quantity of nodes of the found valid access ring and the access site device chain does not exceed a limited threshold N of the IGP domain, for example, a node threshold N, forms the atomic domain by using the access site device chain and the found valid access ring; or if no valid access ring intersected with the access site device chain is found, or a total quantity of nodes of the found valid access ring and the access site device chain exceeds a limited threshold N of the IGP domain, for example, a node threshold N, forms the atomic domain by using the access site device chain and a path from a head node of the access site device chain to a nearest ASG through the access site link, where N is an integer greater than 1.

In this embodiment of this application, IGP domain division is performed based on different types of chains with reference to a requirement of IGP domain division on a total quantity of links or nodes, to make the IGP domain division more appropriate and effective.

In a possible implementation, that the division unit is configured to obtain the IGP domain based on the atomic domain may specifically include that the division unit is configured to: based on a requirement for the IGP domain division, use one atomic domain as one IGP domain, or combine, to one IGP domain, at least two atomic domains whose total quantity of links does not exceed the link threshold N.

In this embodiment, based on different requirements for the IGP domain division in practice, a flexible division manner may be used. The division manner may be that one atomic domain is one IGP domain, or a plurality of atomic domains are combined to one IGP domain. In addition, the requirement for the total quantity of links or the total quantity of nodes in the IGP domain is considered, to make the IGP division manner flexible and effective.

In a possible implementation, the apparatus further includes an allocation unit, configured to: after the division unit performs the IGP domain division, allocate a domain number to the new IGP domain obtained through division. Specifically, in a process in which the division unit allocates the domain number, for an IGP domain that includes a link carrying a historical domain number, the historical domain number in the new IGP domain obtained through division may be preferentially used as an idle number for reallocation; for an IGP domain that does not include a link carrying a historical domain number, a new domain number is directly allocated to the IGP domain.

In this embodiment of this application, the domain number is automatically instead of manually allocated to the new IGP domain obtained through division, thereby improving efficiency of allocating a domain number. In addition, in this embodiment of this application, the historical domain number in the link in the IGP domain is fully used in the process of allocating a domain number, thereby saving domain number resources and improving network stability to some extent.

In a possible implementation, in a process in which the allocation unit reallocates the historical domain number that is in the new IGP domain obtained through division and that is used as the idle number, reallocation is performed based on a quantity of links whose domain numbers need to be adjusted.

In this embodiment of this application, whether to reallocate a domain number is determined based on the quantity of links whose domain numbers need to be changed, so that the domain numbers in the links are not greatly changed as much as possible, thereby saving domain number resources and improving network stability to some extent.

In a possible implementation, that the allocation unit is configured to preferentially use, as the idle number for reallocation, the historical domain number in the new IGP domain obtained through division may specifically include that

the allocation unit is configured to: divide, into at least one association domain set, the new IGP domain obtained through division, where IGP domains with an association relationship are added to an association domain set; obtain an idle domain number set of the association domain set; reallocate, to an IGP domain in the association domain set based on the quantity of links whose domain numbers need to be adjusted, an idle domain number from the idle domain number set of the association domain set; and when the idle domain numbers in the idle domain number set are insufficient for allocation, allocate a new domain number to an IGP domain to which no idle domain number is allocated in the association domain set, where the association relationship is that one IGP domain and another IGP domain include at least one same idle domain number.

In this embodiment of this application, when there are a plurality of IGP domains having a same idle domain number, for example, every two IGP domains have a same idle domain number, domain numbers are allocated in comprehensive consideration of a domain number condition in the plurality of IGP domains, thereby minimizing a quantity of links whose domain numbers need to be changed in the process of allocating a domain number.

In a possible implementation, that the allocation unit reallocates, to the IGP domain in the association domain set based on the quantity of links whose domain numbers need to be adjusted, the idle domain number from the idle domain number set of the association domain set may specifically include that

the allocation unit determines a quantity of allocation manners based on a quantity of elements in the association domain set and a quantity of elements in the idle domain number set; and when the quantity of allocation manners is less than a preset allocation manner threshold Q, selects a manner in which the quantity of links whose domain numbers are to be modified in the association domain set is minimized, to perform allocation; or when the quantity of allocation manners is greater than or equal to a preset allocation manner threshold Q, selects, based on each IGP domain in the association domain set, a manner in which a quantity of links whose domain numbers are to be modified in each IGP domain is minimized, to perform allocation, where Q is an integer greater than 1.

In this embodiment of this application, a specified threshold condition is set. In this way, when there are excessive allocation manners, the domain number is allocated based on a single IGP domain; and when there is a relatively appropriate quantity of allocation manners, the domain numbers are allocated based on a plurality of IGP domains. Therefore, the foregoing benefits of allocating domain numbers based on a plurality of IGP domains can be obtained, and calculation complexity and time consumption brought due to domain number allocation based on the plurality of IGP domains when there are excessive allocation manners can be avoided, thereby improving efficiency and scientificity of allocating a domain number.

According to a fourth aspect, an embodiment of this application provides an apparatus for obtaining an interior gateway protocol IGP domain through division in a network. The apparatus includes a division unit and an allocation unit. The division unit is configured to perform IGP domain division in a changed network based on a network topology. The allocation unit is configured to: after the division unit performs the IGP domain division, allocate a domain number to a new IGP domain obtained through division. Specifically, in a process in which the division unit allocates a domain number, for an IGP domain that includes a link carrying a historical domain number, the historical domain number in the new IGP domain obtained through division may be preferentially used as an idle number for reallocation; for an IGP domain that does not include a link carrying a historical domain number, a new domain number is directly allocated to the IGP domain.

In this embodiment of this application, the domain number is automatically instead of manually allocated to the new IGP domain obtained through division, thereby improving efficiency of allocating a domain number. In addition, in this embodiment of this application, the historical domain number in the link in the IGP domain is fully used in the process of allocating a domain number, thereby saving domain number resources and improving network stability to some extent.

In a possible implementation, in a process in which the allocation unit reallocates the historical domain number that is in the new IGP domain obtained through division and that is used as the idle number, reallocation is performed based on a quantity of links whose domain numbers need to be adjusted.

In this embodiment of this application, whether to reallocate a domain number is determined based on the quantity of links whose domain numbers need to be changed, so that the domain numbers in the links are not greatly changed as much as possible, thereby saving domain number resources and improving network stability to some extent.

In a possible implementation, that the allocation unit is configured to preferentially use, as the idle number for reallocation, the historical domain number in the new IGP domain obtained through division may specifically include that

the allocation unit is configured to: divide, into at least one association domain set, the new IGP domain obtained through division, where IGP domains with an association relationship are added to an association domain set; obtain an idle domain number set of the association domain set; reallocate, to an IGP domain in the association domain set based on the quantity of links whose domain numbers need to be adjusted, an idle domain number from the idle domain number set of the association domain set; and when the idle domain numbers in the idle domain number set are insufficient for allocation, allocate a new domain number to an IGP domain to which no idle domain number is allocated in the association domain set, where the association relationship is that one IGP domain and another IGP domain include at least one same idle domain number.

In this embodiment of this application, when there are a plurality of IGP domains having a same idle domain number, for example, every two IGP domains have a same idle domain number, domain numbers are allocated in comprehensive consideration of a domain number condition in the plurality of IGP domains, thereby minimizing a quantity of links whose domain numbers need to be changed in the process of allocating a domain number.

In a possible implementation, that the allocation unit reallocates, to the IGP domain in the association domain set based on the quantity of links whose domain numbers need to be adjusted, the idle domain number from the idle domain number set of the association domain set may specifically include that

the allocation unit determines a quantity of allocation manners based on a quantity of elements in the association domain set and a quantity of elements in the idle domain number set; and when the quantity of allocation manners is less than a preset allocation manner threshold Q, selects a manner in which the quantity of links whose domain numbers are to be modified in the association domain set is minimized, to perform reallocation; or when the quantity of allocation manners is greater than or equal to a preset allocation manner threshold Q, selects, based on each IGP domain in the association domain set, a manner in which a quantity of links whose domain numbers are to be modified in each IGP domain is minimized, to perform reallocation, where Q is an integer greater than 1.

In this embodiment of this application, a specified threshold condition is set. In this way, when there are excessive allocation manners, the domain number is allocated based on a single IGP domain; and when there is a relatively appropriate quantity of allocation manners, the domain numbers are allocated based on a plurality of IGP domains. Therefore, the foregoing benefits of allocating domain numbers based on a plurality of IGP domains can be obtained, and calculation complexity and time consumption brought due to domain number allocation based on the plurality of IGP domains when there are excessive allocation manners can be avoided, thereby improving efficiency and scientificity of allocating a domain number.

According to a fifth aspect, an embodiment of this application provides an apparatus for obtaining an interior gateway protocol IGP domain through division in a network. The apparatus may be an access site device (for example, a CSG), an aggregation site device (for example, an ASG), or a controller (for example, an SDN controller). The apparatus includes a processor and a memory. The processor is configured to execute a computer program in the memory, to perform the first aspect and any implementation of various possible implementations of the first aspect.

According to a sixth aspect, an embodiment of this application provides an apparatus for obtaining an interior gateway protocol IGP domain through division in a network. The apparatus may be an access site device (for example, a CSG), an aggregation site device (for example, an ASG), or a controller (for example, an SDN controller). The apparatus includes a processor and a memory. The processor is configured to execute a computer program in the memory, to perform the second aspect and any implementation of various possible implementations of the second aspect.

For an effect of each implementation of the apparatus, refer to the descriptions in the foregoing corresponding part and descriptions in a related part in this specification. Details are not described herein again.

According to a seventh aspect, an embodiment of this application provides a system for obtaining an interior gateway protocol IGP domain through division in a network. The system includes an access site device (for example, a CSG) and an aggregation site device (for example, an ASG). The access site device may implement a function or a feature of any apparatus in the third aspect and various possible implementations of the third aspect; and/or the aggregation site device may implement a function or a feature of any apparatus in the third aspect and various possible implementations of the third aspect.

In a possible implementation, the system may further include a controller, for example, an SDN controller. The controller may implement a function or a feature of any apparatus in the third aspect and various possible implementations of the third aspect.

According to an eighth aspect, an embodiment of this application provides a system for obtaining an interior gateway protocol IGP domain through division in a network. The system includes an access site device (for example, a CSG) and an aggregation site device (for example, an ASG). The access site device may implement a function or a feature of any apparatus in the fourth aspect and various possible implementations of the fourth aspect; and/or the aggregation site device may implement a function or a feature of any apparatus in the fourth aspect and various possible implementations of the fourth aspect.

In a possible implementation, the system may further include a controller, for example, an SDN controller. The controller may implement a function or a feature of any apparatus in the fourth aspect and various possible implementations of the fourth aspect.

For an effect of each implementation of the system, refer to the descriptions in the foregoing corresponding part and descriptions in a related part in this specification. Details are not described herein again.

According to a ninth aspect, an embodiment of this application provides a computer readable storage medium. The computer storage medium stores program code. The program code is used to instruct to perform the first aspect and any implementation of various possible implementations of the first aspect.

According to a tenth aspect, an embodiment of this application provides a computer readable storage medium. The computer storage medium stores program code. The program code is used to instruct to perform the second aspect and any implementation of various possible implementations of the second aspect.

For an effect of each implementation of the computer readable storage medium, refer to the descriptions in the foregoing corresponding part and descriptions in a related part in this specification. Details are not described herein again.

According to an eleventh aspect, an embodiment of this application provides a processor. The processor may execute a computer program in the processor or read and execute a computer program outside the processor, to implement any method in the first aspect and various possible implementations of the first aspect.

According to a twelfth aspect, an embodiment of this application provides a processor. The processor may execute a computer program in the processor or read and execute a computer program outside the processor, to implement any method in the second aspect and various possible implementations of the second aspect.

For an effect of each implementation of the processor, refer to the descriptions in the foregoing corresponding part and descriptions in a related part in this specification. Details are not described herein again.

**BRIEF DESCRIPTION OF DRAWINGS**

To describe the technical solutions in the embodiments of this application or in the prior art more clearly, the following briefly describes the accompanying drawings required for describing the embodiments or the prior art. Apparently, the accompanying drawings in the following description show some embodiments of this application, and a person of ordinary skill in the art may still derive other drawings from these accompanying drawings without creative efforts.

FIG. 1 is a schematic diagram of an example embodiment to which a network in an embodiment of this application can be applied;

FIG. 2 is an example structural diagram of a network element that can be used to implement an embodiment of this application;

FIG. 3 is a schematic diagram of an example embodiment of a part of a topology structure of a network;

FIG. 4 is a schematic diagram of an example embodiment of a part of an initially constructed network;

FIG. 5 is a schematic diagram of an example embodiment of a part of a changed network;

FIG. 6 is a flowchart of a method for obtaining an IGP domain through division in a network according to an embodiment of this application;

FIG. 7 is a flowchart of a method for determining a changed access site subgraph according to an embodiment of this application;

FIG. 8 is a flowchart of a method for allocating a link to an atomic domain according to an embodiment of this application;

FIG. 9 is a flowchart of a method for allocating a domain number according to an embodiment of this application;

FIG. 10 is a schematic diagram of a division result generated from an example embodiment of applying a constructed function according to an embodiment of this application;

FIG. 11 is a schematic diagram of a division result generated from another example embodiment of applying a constructed function according to an embodiment of this application;

FIG. 12 is a structural diagram of an example embodiment of a network device that can be used to implement an embodiment of this application;

FIG. 13 is a structural diagram of another example embodiment of a network device that can be used to implement an embodiment of this application; and

FIG. 14 is a structural diagram of another example embodiment of a network device that can be used to implement an embodiment of this application.

## DESCRIPTION OF EMBODIMENTS

The following clearly and comprehensively describes the technical solutions in the embodiments with reference to the accompanying drawings in this application.

The embodiments of this application may be applied to network division. Typically, the embodiments may be applied to interior gateway protocol (Interior Gateway Protocol, IGP) domain division in a bearer network. The following describes the solutions in the embodiments of this application in detail by using an example in which IGP domain division is performed in an Internet protocol (Internet Protocol, IP) radio access network (Radio Access Network, RAN).

Generally, the IP RAN includes a core layer, an aggregation layer, and an access layer. The embodiments of this application are mainly implemented at the aggregation layer and the access layer. The access layer of the IP RAN includes an access site device such as a cell site gateway (Cell Site Gateway, CSG), configured to receive and process various service signals of a base station and forward the processed service signals to the aggregation layer for transmission. The aggregation layer includes an aggregation site device such as an aggregation site gateway (Aggregation Site Gateway, ASG) ASG, configured to aggregate and forward various service signals processed by the CSG. To improve reliability, the IP RAN is usually a ring network. The aggregation site device may constitute an aggregation ring. A combination of an access device and an aggregation device may constitute an access ring. Each aggregation ring may be connected to a plurality of access rings. The embodiments of this application are described in detail below by using the CSG and the ASG as an example. It should be noted that a CSG node, a CSG apparatus, a CSG device, and a CSG described in the embodiments of this application may be used interchangeably. Correspondingly, an ASG node, an ASG apparatus, an ASG device, and an ASG may also be used interchangeably.

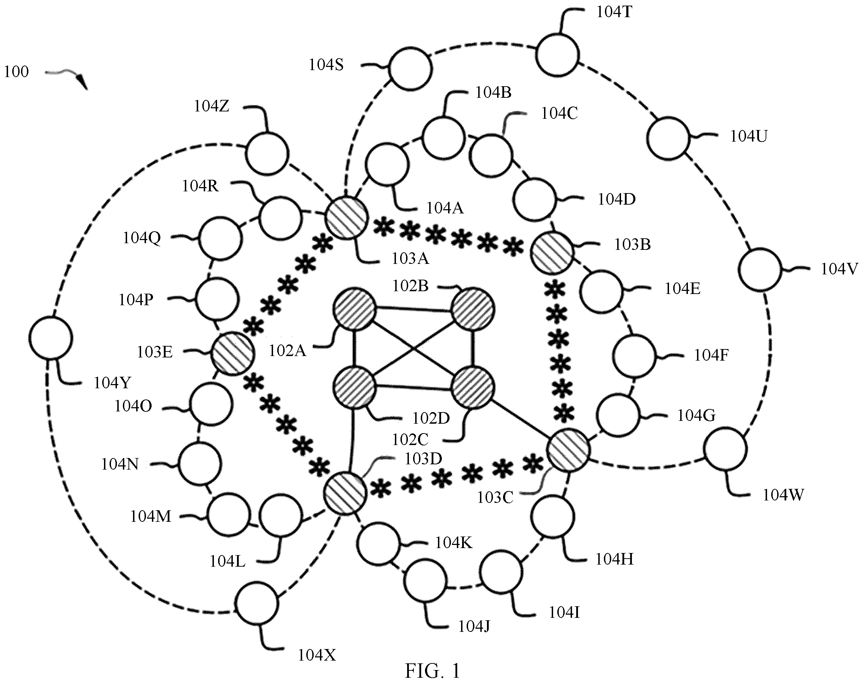

FIG. 1 is a schematic diagram of an example embodiment of a network 100. In an example embodiment, the network 100 may be an IP RAN including one or more rings. The network 100 may be configured to transmit data traffic among a plurality of network nodes within the network 100. The network 100 may include a plurality of central office (central office, CO) nodes 102A-102D, a plurality of ASG nodes 103A-103E, and a plurality of CSG nodes 104A-104Z. The CO nodes 102A-102D may be nodes at a core layer of the network. A data service (for example, an Internet service or a telephone service) may be exchanged or transmitted among the CO nodes 102A-102D, the ASG nodes 103A-103E, and/or the CSG nodes 104A-104Z. In a specific embodiment, an ASG node (for example, the ASG nodes 103A-103E) may be a carrier-class multi-service aggregator, and may be configured to multiplex a plurality of services to a single network interface to optimize cellular backhaul. The ASG nodes 103A-103E may be coupled to one or more CSG nodes 104A-104Z and/or to one or more CO nodes 102A-102D. The ASG nodes 103A-103E may constitute one or more aggregation rings (for example, in a form of a star chart). The aggregation ring may include a connection between the ASG nodes. In a specific embodiment, the CSG node (for example, the CSG nodes 104A-104Z) may be a multi-service access device. For example, the CSG may be located on an edge of a metropolitan area network. The CSG nodes 104A-104Z may all be connected to a base station tower, a customer site, an edge router, a virtual private network (virtual private network, VPN) client, or any other appropriate network device that is configured to distribute data content and that can be understood by a person of ordinary skill in the art when reading this application. The CSG nodes 104A-104Z may constitute a plurality of access rings (for example, in a form of a dashed line). The access ring may include two or more ASG nodes 103A-103E and one or more CSG nodes 104A-104Z. Generally, each CSG in the network is dual-homed to a pair of ASGs. In this case, the access ring is usually configured as a path whose start point and end point are different ASG devices. In this way, in case of a link fault and/or a fault of the ASG nodes 103A-103E and/or a fault of the CSG nodes 104A-104Z, the CSG nodes 104A-104Z can transmit data traffic to the ASG nodes 103A-103E. It may be understood that, if the dual-homing to the ASG devices is not required, the access ring may be configured as a path whose start point and end point are a same ASG device or different ASG devices.

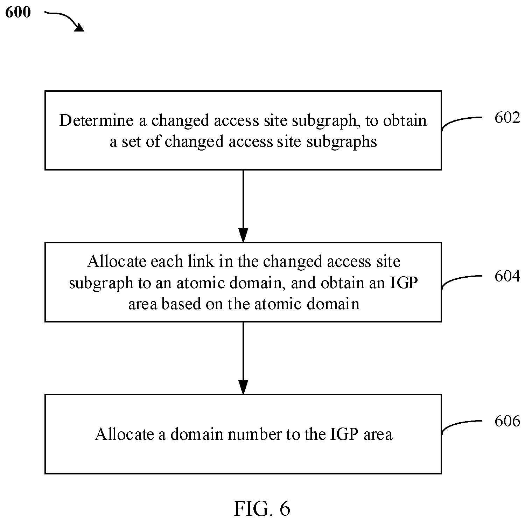

The CO nodes 102A-102D, the ASG nodes 103A-103E, and/or the CSG nodes 104A-104Z may perform data communication with a centralized controller (for example, a software-defined networking (software-defined networking, SDN) controller). The centralized controller may be any type of controller, configured to receive network topology information from the CO nodes 102A-102D, the ASG nodes 103A-103E, and/or the CSG nodes 104A-104Z, and transmit network topology information about one or more IGP domains to the CO nodes 102A-102D, the ASG nodes 103A-103E, and/or the CSG nodes 104A-104Z. The centralized controller may be configured to implement one or more IP RAN division algorithms, for example, a network division method 600 to be discussed in FIG. 6.

As it may be understood by a person of ordinary skill in the art after reading the embodiments of this application, this application is not limited to specific applications although FIG. 1 shows the network 100 that includes the plurality of CO nodes 102A-102D, the plurality of ASG nodes 103A-103E, and/or the plurality of CSG nodes 104A-104Z. For example, the network 100 may include any appropriate quantity of CO nodes 102A-102D, any appropriate quantity of ASG nodes 103A-103E, and/or any appropriate quantity of CSG nodes 104A-104Z. The CO nodes 102A-102D, the ASG nodes 103A-103E, and/or the CSG nodes 104A-104Z may be interconnected with each other to form a plurality of different network topologies. The use and discuss in FIG. 1 are merely an example to facilitate description and explanation.

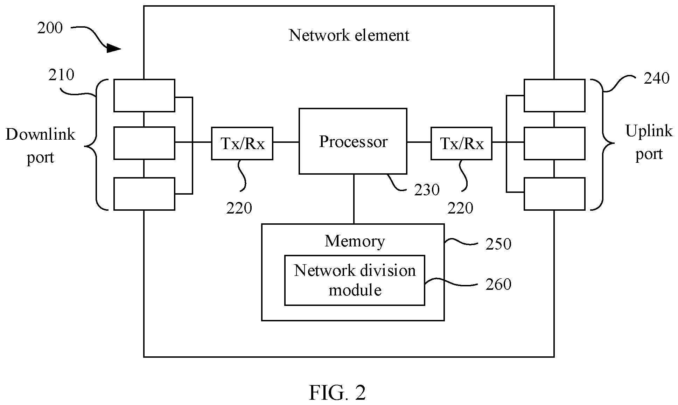

FIG. 2 is a schematic diagram of an example embodiment of a network element 200 that may be configured to perform transmission and processing by using a network (for example, the network 100 shown in FIG. 1). At least some features, functions, and/or methods (for example, the method 600 shown in FIG. 6) described in this embodiment of this application may be implemented in the network element 200. For example, the features, functions, or methods in the embodiments of this application may be implemented by using hardware, firmware, and/or software installed to be run on hardware. The network element 200 may be any device (for example, a switch, a router, a bridge, a server, or a client) that transmits data by using a network, a system, and/or a domain. In addition, a "network node", a "network component", a "network device", a "network element", and/or a similar term may be interchangeably used to generally describe a network device. These terms do not have a particular or special meaning unless otherwise specifically stated and/or claimed in this application. In an example embodiment, the network element 200 may be an apparatus configured to implement IGP domain division. For example, the network element 200 may be the centralized controller, the ASG nodes 103A-103E, or the CSG nodes 104A-104Z that are described in FIG. 1; or may be integrated in these devices.

The network element 200 may include one or more downlink ports 210 coupled to a transceiver (transceiver, Tx/Rx) 220. The Tx/Rx 220 may be a transmitter, a receiver, or a combination thereof. The Tx/Rx 220 may transmit and/or receive a frame from another network node by using the downlink port 210. Similarly, the network element 200 may include another Tx/Rx 220 coupled to a plurality of uplink ports 240. The another Tx/Rx 220 may transmit and/or receive a frame from another node by using the uplink port 240. The downlink port 210 and/or the uplink port 240 may include electrical and/or optical transmitting and/or receiving components. In another example embodiment, the network element 200 may include one or more antennas coupled to the Tx/Rx 220. The Tx/Rx 220 may wirelessly transmit and/or receive data (for example, a packet) from another network element by using one or more antennas.

A processor 230 may be coupled to the Tx/Rx 220, and be configured to process a frame and/or determine which node to send (for example, transmit) a packet to. In an example embodiment, the processor 230 may include one or more multi-core processors and/or a memory 250. The memory 250 may be used as a data storage, a buffer, or the like. It may be understood that, in another embodiment, as shown in FIG. 2, the memory may be located outside the processor. The processor 230 may be implemented as a general-purpose processor, or may be a part of one or more application specific integrated circuits (application specific integrated circuit, ASIC), field-programmable gate arrays (field-programmable gate array, FPGA), and/or digital signal processors (digital signal processor, DSP). Although illustrated as a single processor in the diagram, the processor 230 is not limited thereto, and may include a plurality of processors. The processor 230 may be configured to divide a network into a plurality of IGP domains to meet one or more IGP requirements.

FIG. 2 shows the memory 250 that may be coupled to the processor 230. The memory 250 may be a non-transitory medium configured to store various types of data. The memory 250 may include a storage device including a secondary memory, a read-only memory (read-only memory, ROM), and a random access memory (random access memory, RAM). The secondary memory generally includes one or more disk drives, optical drives, solid-state drives (solid-state drive, SSD), and/or tape drives. The secondary memory is used for nonvolatile storage of data, and used as an overflow storage device if the RAM is not large enough to store all operating data. The secondary memory may be configured to store a program. When the program is selected for execution, the program is loaded to the RAM. The ROM is configured to store instructions read during program execution, and may be further configured to store data read during program execution. The ROM is a nonvolatile memory device that generally has a relatively small storage capacity relative to a relatively large storage capacity of the secondary memory. The RAM is configured to store volatile data, and may be further configured to store an instruction. Access to both the ROM and the RAM is usually faster than to the secondary memory.

The memory 250 may be configured to store instructions for executing the various embodiments described in this specification. For details, refer to descriptions in the following embodiments. In an example embodiment, the memory 250 may include a network division module 260 that can be implemented on the processor 230. When applied to an IP RAN network, in an example embodiment, the network division module 260 may be implemented on a centralized controller to divide the IP RAN network. In another example embodiment, the network division module 260 may be implemented on an ASG node (for example, the ASG nodes 103A-103E described in FIG. 1) or a CSG node (for example, the CSG nodes 104A-104Z described in FIG. 1).

It is understood that by programming an executable instruction and/or loading an executable instruction onto the network element 200, at least one of the processor 230, the buffer, and the long-term memory is changed, thereby transforming the network element 200 into a particular machine or apparatus such as a multi-core forwarding architecture having particular functions described in this application. It may be understood that, according to a well-known design rule in this field, a function implemented by loading executable software to a computer may be converted to hardware implementation. This is very basic in the field of electronic engineering and software engineering. Whether to implement a particular new function by using software or hardware is usually determined based on design stability and a quantity of to-be-manufactured units instead of another related problem in conversion from a software field to a hardware field. Generally, a frequently changing design is preferred to be implemented by using software, because rewriting a hardware implementation solution is more expensive than rewriting software. Generally, a stable design to be applied for mass production may be preferred to be implemented by using hardware (for example, by using an ASIC), because for large production activities, costs of hardware implementation may be lower than costs of software implementation. Generally, a design may be developed and tested in a software form, and then be transformed, according to the well-known design rule in this field, to an equivalent hardware implementation solution in an ASIC that is hardwired to a software instruction. In the same manner, a new machine controlled by the ASIC is a particular machine or apparatus. Likewise, a programmed computer and/or a computer on which an executable instruction is loaded may also be considered as a particular machine or apparatus.

Any processing of this application may be implemented by executing a computer program by a processor (for example, a general-purpose multi-core processor). In this case, a computer program product may be provided to a computer or a network device using any type of non-transitory computer readable medium. The computer program product may be stored in the non-transitory computer readable medium in the computer or the network device. The non-transitory computer readable medium may include any type of tangible storage medium. For example, the non-transitory computer readable medium includes a magnetic storage medium (for example, a floppy disk, a magnetic tape, or a hard disk drive), an optical magnetic storage medium (for example, a magneto-optical disk), a compact disc read-only memory (compact disc read-only memory, CD-ROM), a compact disc-recordable (compact disc-recordable, CD-R), a compact disc-rewritable (compact disc-rewritable, CD-R/W), a digital versatile disc (digital versatile disc, DVD), a Blu-ray (registered trademark) disc (Blu-ray disc, BD), and a semiconductor memory (for example, a mask ROM, a programmable ROM (programmable ROM, PROM), an erasable PROM, a flash ROM, and a RAM). In addition, the computer program product may be provided to a computer or a network device using any type of transitory computer readable medium. For example, examples of a transitory computer readable medium include an electrical signal, an optical signal, and an electromagnetic wave. The transitory computer readable medium can provide a program to a computer by using a wired communication line (for example, an electrical wire and an optical fiber) or a wireless communication line.

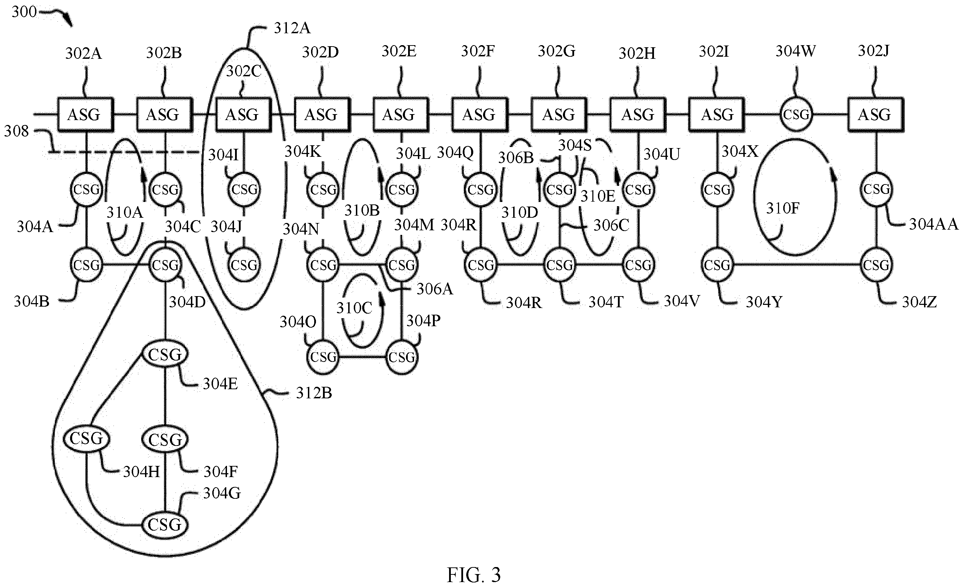

FIG. 3 is a schematic diagram of an example embodiment of a part of a network 300. A part of the network 300 includes a plurality of ASG nodes 302A-302J and a plurality of CSG nodes 304A-304AA. The ASG nodes 302A-302J and the CSG nodes 304A-304AA may be used to implement one or more different network topology structures.

The network topology structure may include but is not limited to a ring, a chain, and a combination thereof. If an access site device has at least two non-overlapping paths along which the access site device is finally connected to an aggregation site device, it is considered that the two paths along which the access site device is connected to the aggregation site device form a ring, and the ring in this type is referred to as an access ring. Both a start point and an end point of the access ring are the ASG node. It may be understood that the ASG node may be a same ASG node, or may be different ASG nodes. For example, a ring 310A in FIG. 3 may include the ASG nodes 302A and 302B, and paths formed through passing the plurality of CSG nodes 304A-304D. The access ring may be configured so that the CSG node is dual-homed to the ASG nodes. In this way, in case of a link fault and/or a fault of the ASG nodes 103A-103E and a fault of the CSG nodes 104A-104Z, the CSG nodes 104A-104Z can exchange data traffic with the ASG nodes 103A-103E.

A chain (chain) is a basic topology unit that cannot be connected to another device to form a ring network structure. The chain may include a head node and a plurality of CSG nodes. These CSG nodes may access another network topology structure and/or aggregation ring (for example, the aggregation ring described in FIG. 1) through the head node. The head node may be a node through which all the CSG nodes in the chain need to access the aggregation ring. Two types of chains may exist in the network 300: an aggregation site device chain such as an ASG chain, or an access site device chain such as a CSG chain. The aggregation site device chain means a chain that includes an aggregation site device, and the access site device chain means a chain that does not include an aggregation site device. As shown in FIG. 3, an ASG chain 312A may include a head node: an ASG node 302C; and CSG nodes 304I and 304J. An ASG chain may be configured so that a CSG node in the ASG chain is connected to a single ASG node (for example, an ASG head node). A CSG chain 312B may include a head node: a CSG node 304D; and CSG nodes 304E-304H. A CSG head node may be connected to one or more additional network topology structures. The network topology structure may be any network part applicable for dividing an IP RAN network in a network formed by the ASG nodes 302A-302J, the CSG nodes 304A-304AA, and the CSG chain. The CSG chain may be a link among the CSG nodes 304A-304AA and the ASG nodes 302A-302J, or a link among the CSG nodes 304A-304AA and other CSG nodes 304A-304AA.

In a ring and a chain, nodes are connected to each other by using a link (link). The link between access site devices and the link between an access site device and an aggregation site device are referred to as access site links. A link other than the access site link is referred to as a non-access site link. For example, a link between a CSG and another CSG and a link between a CSG and an ASG are referred to as access site links. The link other than the access site link is referred to as the non-access site link.

The network topology structure may be generally represented by a diagram (for example, a structural diagram of a network topology shown in FIG. 3). A network device may perform IGP domain division based on the network topology. The network topology may include a network element role and a connection relationship between network elements, for example, an ASG node, a CSG node, and a connection between the ASG node and the CSG node.

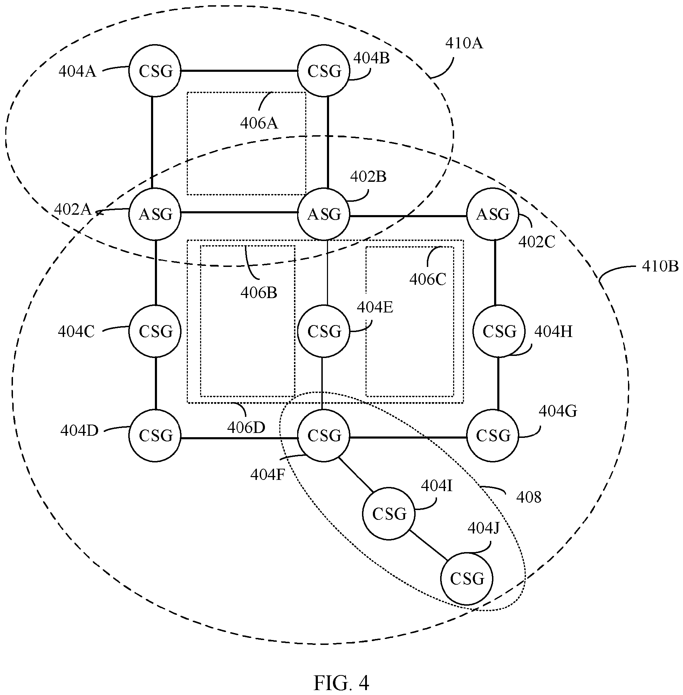

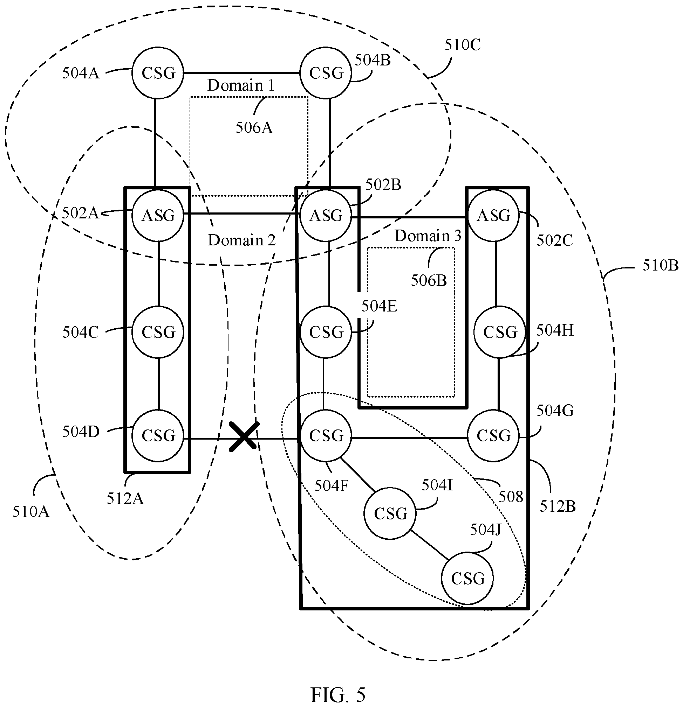

In this embodiment of this application, when the IGP domain division is performed, calculation is performed by using a changed topology domain in the network topology. For an initially constructed network topology (for example, a structural diagram of a network topology shown in FIG. 4), because all nodes and links are newly added, it may be considered that the entire network topology is a changed topology domain, and the entire network topology may be included in a calculation range. For a changed network topology (for example, a structural diagram of a network topology shown in FIG. 5), a topology domain that is changed at this time is used as a calculation range. For ease of expression and calculation of the changed topology domain, in this embodiment of this application, the network topology is divided into one or more subgraphs, and the subgraph is used as a basic computing unit. For example, in an IP RAN network, an access site subgraph may be used as a basic computing unit. The access site subgraph is one or more connection diagrams formed after the non-access site link is removed from the network topology. In other words, a connection diagram formed by CSGs that can still be connected to each other after the ASG is removed is an access site subgraph.

FIG. 4 is a schematic diagram of an example embodiment of a part of an initially constructed network 400. The part of the network 400 includes a plurality of ASG nodes 402A-402C and a plurality of CSG nodes 404A-404J. The part of the network 400 includes a plurality of access rings 406A-406D. Rings 406A-406D include a first ring 406A including the ASG nodes 402A and 402B and the CSG nodes 404A and 404B, and a second ring 406B including the ASG nodes 402A and 402B and the CSG nodes 404C-404F, a third ring 406C including the ASG nodes 402B and 402C and the CSG nodes 404E-404H, and a fourth ring 406D including the ASG nodes 402A-402C and the CSG nodes 404C, 404D, and 404F-404H. The part of the network 400 further includes a chain 408 including CSG nodes 404F and 404I-404J. The part of the network 400 further includes access site subgraphs 410A and 410B. The access site subgraphs 410A and 410B include a first access site subgraph 410A including the ASG nodes 402A and 402B and the CSG nodes 404A and 404B, and a second access site subgraph 410B including the ASG nodes 402A-402C and the CSG nodes 404C-404J.

The network topology of FIG. 4 may be changed. As shown in FIG. 5, FIG. 5 is a schematic diagram of an example embodiment of a part of a changed network 500. The network 500 is obtained by deleting the links 404D-404F on the basis of the network 400. The part of the network 500 includes a plurality of ASG nodes 502A-502C and a plurality of CSG nodes 504A-504J. The part of the network 500 includes a plurality of access rings 506A and 506B. The rings 506A and 506B include a first ring 506A including the ASG nodes 502A and 502B and the CSG nodes 504A and 504B, and a second ring 506B including the ASG nodes 502B and 502C and the CSG nodes 504E-404H. The part of the network 500 further includes a chain 508 including the CSG nodes 504F and 5041-504J. The part of the network 500 further includes access site subgraphs 510A-510C. The access site subgraphs 510A-510C include a first access site subgraph 510A including the ASG nodes 502A and the CSG nodes 504C and 504D, a second access site subgraph 510B including the ASG nodes 502B and 502C and the CSG nodes 504E-504J, and a third access site subgraph 510C including the ASG nodes 502A and 502B and the CSG nodes 504A and 504B.

A network (for example, the network 100 described in FIG. 1) and/or a part of a network (for example, a part of the network 400 described in FIG. 4 and a part of the network 500 described in FIG. 5) may be divided into a plurality of IGP domains based on an IGP requirement. For example, the IGP domain division requirement may include one or more of the following:

First, a quantity of links or nodes included in an IGP domain is less than a specified threshold N. For example, the quantity of links included in the IGP domain is less than a preset link threshold N, or the quantity of nodes included in the IGP domain is less than a preset node threshold N.

Second, it is ensured that a CSG is dual-homed at the IGP protocol level. This is to improve network reliability, so that the CSG node can reach at least one ASG node in case of a fault of an ASG node or a fault of a CSG node and/or a link fault.

Third, a quantity of shared links that belong to one or more IGP domains in a network may be relatively small. Generally, to meet the first requirement, a physical link may have to be configured as a plurality of logical links to be allocated to different IGP domains. However, during IGP domain division, the quantity of logical links needs to be reduced as much as possible.

Fourth, when the network topology is adjusted, configuration information of an original link domain should be adjusted as little as possible to be affected to a relatively minimum extent.

In addition, the IGP domain requirement may include any other appropriate requirement that can be understood by a person of ordinary skill in the art when reading this application. One or more IGP domain requirements (for example, an IGP chain threshold) may be set and/or determined by a network operator or a manager. For example, the network operator may determine the link threshold by using a planning tool based on network scalability and/or a protocol used in a network (for example, an intermediate system to intermediate system (intermediate system to intermediate system, IS-IS) protocol). The network operator may transmit the one or more IGP domain requirements to an IGP domain division apparatus (for example, a centralized controller) by using a computer or any other appropriate device that can be understood by a person of ordinary skill in the art when reading this application.

FIG. 6 is a flowchart of an embodiment of an IGP domain division method 600. In a specific embodiment, the method 600 may be implemented in a centralized controller such as an SDN controller. In another specific embodiment, the method 600 may be implemented on an ASG node (for example, the ASG nodes 103A-103E described in FIG. 1) or a CSG node (for example, the CSG nodes 104A-104Z described in FIG. 1). In the method 600, an IP RAN network topology (for example, an ASG node, a CSG node, and a connection therebetween) may be used to generate a plurality of IGP domains. In the method 600, a plurality of ASG nodes and/or a plurality of CSG nodes may be queried to obtain IP RAN network topology information, and/or network information from a plurality of ASG nodes and/or a plurality of CSG nodes may be received to obtain IP RAN network topology information. The network information may include one or more of the following information: a network node identifier, a network node address (for example, an IP address or a media access control (media access control, MAC) address), a routing table, and a network identifier (for example, a virtual private local area network (virtual private local area network, VLAN) identifier).

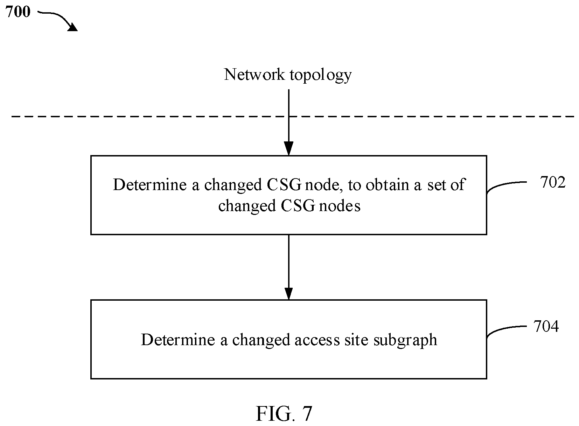

In step 602 in the method 600, a changed access site subgraph may be determined to obtain a set of changed access site subgraphs. The access site subgraph is one or more connection diagrams formed after a non-access site link is removed from a network topology (for example, two access site subgraphs included in FIG. 4, and three access site subgraphs included in FIG. 5). In this embodiment of this application, the access site subgraph is a basic computing unit. Details of determining the changed access site subgraph are to be discussed in FIG. 7 below.

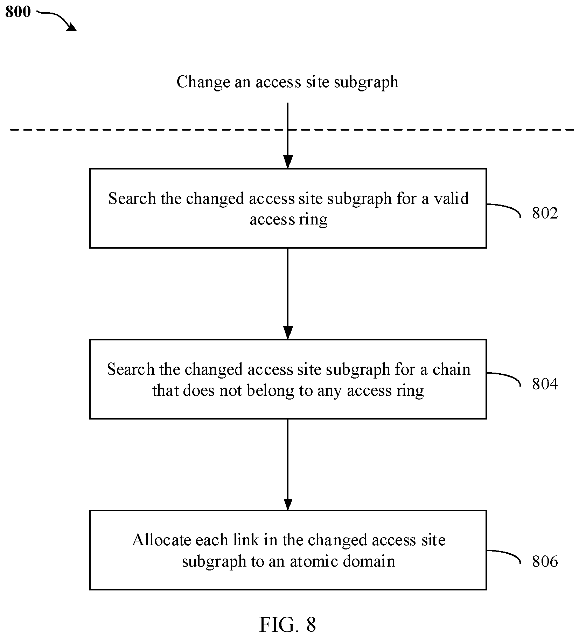

In step 604 in the method 600, each link in the changed access site subgraph may be allocated to an atomic domain, and an IGP domain may be obtained based on the atomic domain. The atomic domain is a minimum unit for forming an IGP domain. The atomic domain may be obtained through selecting a valid access ring in which each link is located and/or a chain in which each link is located. As described above, the changed access site subgraph may be divided into a plurality of rings (which may be referred to as a ring set), and one or more rings are selected from the ring set as the atomic domain. A set formed by these selected atomic domains is the atomic domain set. In a specific embodiment, a condition that an atomic domain belongs to an atomic domain set is that the atomic domain includes at least one physical link of the atomic domain set. It may be understood that the atomic domain may also include one or more chains. For example, when the access site subgraph includes only a chain, or the atomic domain is a combination of a ring and a chain, for example, one or more chains are mounted on some access rings, the ring and the chain mounted on the ring may be combined to one atomic domain when it is ensured that a link threshold or a node threshold is not exceeded. After the atomic domains are obtained, the atomic domains may be combined. The plurality of atomic domains are combined to one IGP domain, or one atomic domain may be directly used as one IGP domain. Allocating a link to an atomic domain is to be discussed in FIG. 8 below.

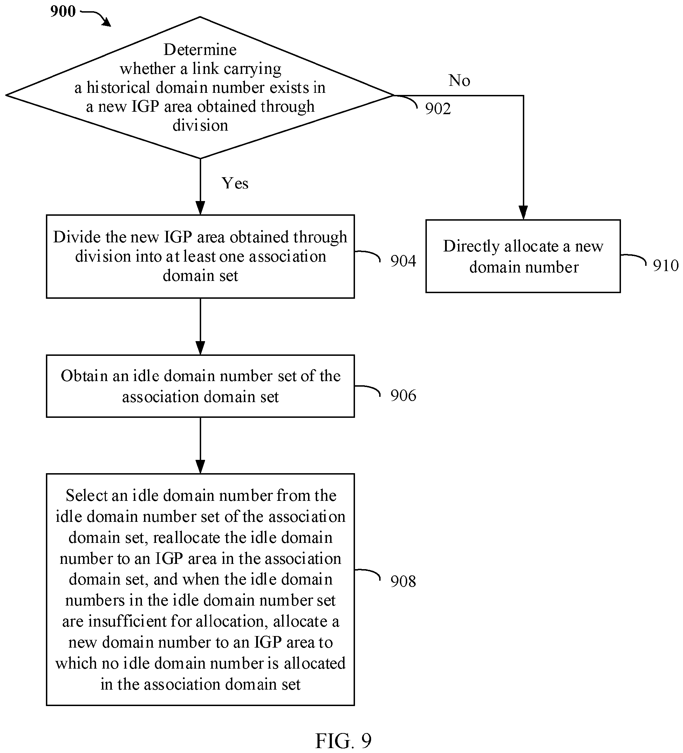

In step 606 in method 600, a domain number may be allocated to the IGP domain. A specific implementation of allocating the domain number to the IGP domain is to be discussed in FIG. 9 below.

FIG. 7 is a schematic diagram of an embodiment of a method 700 for determining a changed access site subgraph. One or more changed access site subgraphs (for example, the access site subgraphs 410A and 410B in FIG. 4 and the access site subgraphs 510A and 510B in FIG. 5) may be determined by implementing the method 700, to obtain a set of changed access site subgraphs. In this embodiment, the method 700 includes the following processing:

Step 702: Determine a changed CSG node, to obtain a set of changed CSG nodes.

In this step, based on a network topology, a CSG node to which link addition or link deletion occurs may be determined as the changed CSG node, to obtain the set of changed CSG nodes. For example, all links in FIG. 4 are newly added. In this case, the set of changed CSG nodes is [404A, 404B, ..., 404J]. In FIG. 5, only a link between the CSG node 504D and the CSG node 504F is deleted. In this case, the set of changed CSG nodes is [504D, 504F].

Step 704: Determine a changed access site subgraph.

In a specific implementation, a specific implementation of determining the changed access site subgraph may be: traversing elements in the set of changed CSG nodes, obtaining an access site subgraph in which each element is located, and determining the access site subgraph as the changed access site subgraph. In all access site subgraphs included in the network topology, a set formed by an access site subgraph including any changed CSG node is referred to as the set of changed access site subgraphs. FIG. 4 includes two changed access site subgraphs 410A and 410B. FIG. 5 includes two changed access site subgraphs 510A and 510B. The access site subgraph 510C in FIG. 5 does not include any element in the set of changed CSG nodes; and therefore, is not a changed access site subgraph.

FIG. 8 is a schematic diagram of an embodiment of a method 800 for allocating a link to an atomic domain. The link may be allocated to the atomic domain by implementing the method 800. In this embodiment, the method 800 includes the following processing:

Step 802: Search a changed access site subgraph for a valid access ring.

In a specific implementation, the valid access ring is an access ring whose link quantity does not exceed a link threshold N of an IGP domain. It may be understood that, that a node quantity does not exceed a node threshold N of an IGP domain may alternatively be used as a criterion for determining the valid access ring. In other words, the valid access ring is an access ring whose node quantity does not exceed the node threshold N of the IGP domain. The specified threshold of the IGP domain is specified in an IGP domain division requirement. When the link quantity of the IGP domain is used as a criterion for determining a valid access ring, the specified threshold is the link threshold N, where a value of N may be an integer greater than 1. It indicates that the quantity of links included in the IGP domain is less than N. When the node quantity of the IGP domain is used as a criterion for determining a valid access ring, the specified threshold is a node threshold N, where a value of N is an integer greater than 1. It indicates that the quantity of nodes included in the IGP domain is less than N. The following is described by using the link threshold as an example. In this embodiment of this application, the valid access ring is defined based on the link threshold N specified in the IGP domain division requirement. To be specific, an access ring whose link quantity does not exceed the link threshold N is defined as a valid access ring. Then, IGP domain division is performed based on the valid access ring, so that an IGP domain obtained through division can meet the IGP domain division requirement. It may be understood that, if the link threshold N is not specified in the IGP domain division requirement, the valid access ring may include any access ring. In other words, any access ring may be considered as a valid access ring.

When step 802 is implemented, an access ring in the changed access site subgraph may be found by using an access ring search algorithm. The access ring search algorithm may be, but is not limited to, a Tiernan algorithm, a Johnson algorithm, or any effective search algorithm that can be understood by a person of ordinary skill in the art when reading this solution and that is used to locate one or more rings in a directed graph. For example, the adopted ring search algorithm may execute the following process: using each ASG device in a changed access site subgraph as a start point, executing a depth-first traversal algorithm, deeply traversing each path whose end point is an ASG device, and using, as an access ring, a path obtained through traversing whose length is greater than 2.

After access rings are found, access rings including a same node and a same link may be further filtered out; and an access ring whose link quantity exceeds the preset link threshold N is filtered out from the obtained access rings; or an access ring whose node quantity exceeds the preset node threshold N is filtered out. In this way, a set of valid access rings in the changed access site subgraph is obtained.

Step 804: Search the changed access site subgraph for a chain that does not belong to any access ring.

In the changed access site subgraph, one or more connection graphs formed after all links belonging to any access ring are removed are chains included in the access site subgraph. For example, after the links in the ring are removed from the access site subgraph 410B in FIG. 4, a connection graph 404F-404I-404J may be obtained, that is, a CSG chain. In FIG. 5, there is no ring in the access site subgraph 510A, and all links form an ASG chain 402A-404C-404D. The access site subgraph 510B is the same as the access site subgraph 410B, and includes a CSG chain 504F-504I-504J.

Step 806: Allocate each link in the changed access site subgraph to an atomic domain.

Because the access site subgraph may include a ring and a chain, when a link is allocated to an atomic domain, a link in the ring and a link in the chain may be allocated in different manners, or may be allocated in a same manner. Description is provided by using an example in which different allocation manners are used for the ring and the chain.

A. For a link in a ring, allocation to an atomic domain may be performed based on a valid access ring in which the link is located. Dual-homing at an IGP protocol level can be ensured through the allocation to an atomic domain based on a valid access ring. According to a dual-homing requirement, a CSG has two non-intersecting paths respectively to two ASGs on a physical link. In other words, the CSG device has two different paths to an aggregation layer on the physical link. It indicates that the CSG device needs to be in an access ring. The ring is allocated to an IGP domain, to ensure the dual-homing at the IGP protocol level. Therefore, in this embodiment of this application, the IGP domain division is performed based on the valid access ring, so that the CSG node can reach at least one ASG node in case of a fault of an ASG node or a fault of a CSG node and/or a link fault.

Specifically, the allocation to an atomic domain based on a valid access ring in which a link is located may include the following:

A1. Obtain a union set of links in all valid access rings in the changed access site subgraph.

The access site subgraph 410B in FIG. 4 is used as an example. It is assumed that the three access rings (that is, the ring 406B: 402A-404C-404D-404F-404E-402B, the ring 406D: 402A-404C-404D-404F-404G-404H-402C, and the ring 406C: 402B-404E-404F-404G-404H-402C) included in the access site subgraph are all valid access rings. A set of links in the valid access rings in the access site subgraph 410B is [402A-404C, 404C-404D, 404D-404F, 404F-404E, 404E-402B, 404F-404G, 404G-404H, 404H-402C].

A2. Traverse the links in the union set; and if a link does not belong to any atomic domain, calculate, by using a pre-constructed evaluation function, a valid access ring including the link, select, as an atomic domain based on a calculation result of the evaluation function, one valid access ring including the link, and add the atomic domain to an atomic domain set; or if the link has been added to at least one atomic domain, continue to traverse a next link until the atomic domain set includes all the links in the union set, where the atomic domain set is a set of atomic domains. Initially, the atomic domain set is empty. Step A2 is performed, so that a new atomic domain obtained through division may be added to the atomic domain set.

The access site subgraph 410B in FIG. 4 is used as an example. When step A2 is performed, the following processing may be included:

    i. First, traverse the link 402A-404C in the union set. Because the atomic domain set is empty initially, the link 402A-404C does not belong to any atomic domain. The valid access ring including the link is calculated by using the pre-constructed evaluation function.

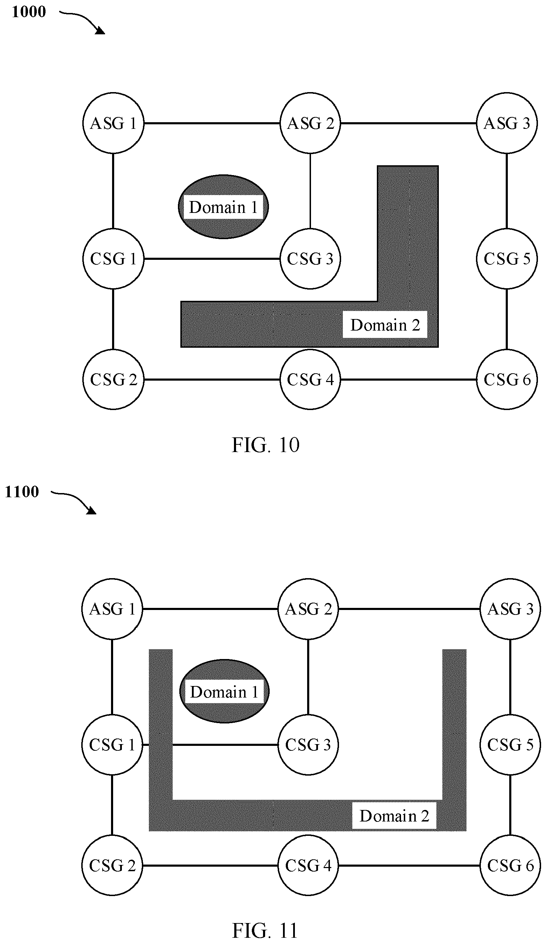

    The evaluation function is preset. Different evaluation functions may be constructed based on different service scenarios. Details of constructing the evaluation function are to be discussed in FIG. 10 and FIG. 11. Description is provided herein by using an example in which the evaluation function is F=100*Dist(access ring)+10*Redudancy+Size(access ring). Herein, Dist(access ring) indicates a quantity that is input to the evaluation function and that is of links on a shortest path in non-access site links of two ASGs at two ends of an access ring. For example, if ASGs 402A and 402B at two ends of the ring 406B are directly connected, Dist(ring 406B)=1; if ASGs 402A and 402C at two ends of a ring 406D are connected by using two non-access site links, Dist(ring 406C)=2. Similarly, Dist(ring 406C)=1. Herein, Redudancy indicates a quantity that is of links in the ring included in the current atomic domain set and that is input to the evaluation function, where a value of Redundancy indicates a quantity of redundant links added to the access ring. Herein, Size(access ring) indicates a quantity that is of links in an access ring and that is input to the evaluation function.

    The ring 406B and the ring 406D that include the link 402A-404C are calculated by using the foregoing evaluation function, and calculation results are F(ring 406B)=100*1+10*0+5=105 and F(ring 406D)=100*2+10*0+6=206.

    Based on a service scenario, a valid access ring that has a minimum or maximum value of the evaluation function is selected as an atomic domain, and the atomic domain is added to the atomic domain set. An example of selecting a valid access ring that has a minimum value of the evaluation function is used. Therefore, the ring 406B is selected as an atomic domain and added to the atomic domain set.

ii. Then, traverse a second link 404C-404D in the union set. Because the ring 406B in the atomic domain set already includes the link, the next link in the union set is traversed.

iii. Traverse links 404D-404F, 404F-404E, and 404E-402B in sequence in the union set. This process is the same as step ii.

iv. Traverse a next edge 404F-404G in the union set. Because 404F-404G has not been added to the atomic domain set, evaluation functions F(ring 406D)=100*2+10*3+6=236 and F(ring 406C)=100*1+10*2+5=125 are applied to the ring 406C and the ring 406D that include 404F-404G. The ring 406C that has a minimum value of the evaluation function is selected and added to the atomic domain set. In this case, the atomic domain set includes all the links in the access site subgraph, thereby completing selection for the atomic domain set.

After the foregoing steps i-iv are performed, all links in a valid access ring are allocated to an atomic domain.

For the access site subgraph 410A in FIG. 4 and the access site subgraph 510 C in FIG. 5, refer to the processing process of steps A1 and A2 to implement atomic domain allocation for a link in a valid access ring. Details are not described herein again.

B. For a link in a chain, allocation to an atomic domain may be performed based on a type of the chain in which the link is located.

The type of the chain may include an aggregation site device chain such as an ASG chain, or an access site device chain such as a CSG chain.

For the ASG chain, the ASG chain may be directly used as an atomic domain. Based on definition of an access site subgraph, if an access site subgraph includes an ASG chain, the access site subgraph includes only the ASG chain. Therefore, the ASG chain is directly used as an atomic domain, to complete atomic domain division of the access site subgraph, for example, the access site subgraph 510A in FIG. 5. The access site subgraph 510A includes only an ASG chain 502A-504C-504D. Therefore, the ASG chain 502A-504C-504D is directly used as an atomic domain, to complete atomic domain division of the access site subgraph 510A.

For the CSG chain, the atomic domain division may be performed by using a valid access ring that is in an atomic domain set and that is intersected with the CSG chain. Specifically, a network device may search the atomic domain set for the valid access ring intersected with the CSG chain. If the valid access ring intersected with the CSG chain is found, and a total quantity of links/nodes of the found valid access ring and the CSG chain does not exceed a limited threshold N of an IGP domain, the CSG chain and the found valid access ring form the atomic domain. If no valid access ring intersected with the CSG chain is found, or a total quantity of links/nodes of the found valid access ring and the CSG chain exceeds a limited threshold N of an IGP domain, the CSG chain and a path from a head node of the CSG chain to a nearest ASG through the access site link form the atomic domain.

The CSG chain in the access site subgraph 410B in FIG. 4 is used as an example. The CSG chain 408 in the access site subgraph 410B is intersected with the valid access ring 406B and the valid access ring 406C in the atomic domain set, that is, intersected with two existing atomic domains in the atomic domain set. It is determined whether a total quantity of links in the CSG chain 408 and the valid access ring 406B or a total quantity of links in the CSG chain 408 and the valid access chain 406C exceeds the link threshold N. If neither one of the total link quantities exceeds N, the valid access ring 406B or the valid access ring 406C may be selected to form an atomic domain with the CSG chain 408. If the total link quantities both exceed N, the CSG chain 408 and a path from a head node 404F of the CSG chain 408 to the ASG node 402B form an atomic domain. The path from the head node 404F of the CSG chain 408 to the ASG node 402B is a shortest path to the ASG node.

It should be noted that the atomic domain formed by the CSG chain and the valid access chain in the atomic domain set may be used as a new atomic domain and be added to the atomic domain set, and the atomic domain formed by the valid access ring generated in step A is deleted from the atomic domain set.

For the access site subgraph 510B in FIG. 5, refer to the foregoing domain division processing process of the CSG chain to implement atomic domain allocation for the CSG chain 508. Details are not described herein again.

The atomic domain division may be completed through processing of the foregoing two parts A and B. The atomic domain obtained through division according to the foregoing method can not only ensure that the quantity of links included in the IGP domain is less than the preset link threshold N or that the quantity of nodes included in the IGP domain is less than the preset node threshold N, but also ensure that the CSG is dual-homed at the IGP protocol level. Therefore, an atomic domain may be directly used as an IGP domain. In some scenarios of IGP domain division in bearer networks, a requirement for reducing a total quantity of IGP domains as much as possible may be further put forward. Based on the division requirement, in this embodiment of this application, atomic domains may be further combined, that is, at least two atomic domains whose total quantity of links does not exceed the link threshold N are combined to one IGP domain. During combination, a priority may be determined based on a quantity of common edges between atomic domains and a scale of a combined atomic domain. For example, during combination, if it is required for the IGP domain division to reduce a quantity of logical links as much as possible, a policy by using which the quantity of common edges between atomic domains is minimized may be selected for combination.

A specific combination policy may be set according to an actual service requirement. This is not limited herein.

It should be noted that the method shown in FIG. 6 is for an access site link in a network. A non-access site link (for example, a link among the ASG nodes 402A, 402B, and 402C in FIG. 4) in the network may be directly allocated to an IGP backbone domain, and a domain number is set to a specific exclusive domain number (for example, domain number 0).

FIG. 9 is a flowchart of a specific embodiment of a method for allocating a domain number to an IGP domain. In a specific embodiment, the method 900 may be applied to the IGP domain division method shown in FIG. 6, to allocate a domain number to a new IGP domain obtained through division. In another specific embodiment, the method 900 may be applied to another IGP domain division solution other than the IGP domain division method shown in FIG. 6. As shown in FIG. 9, the method 900 may include the following steps:

Step 902: Determine whether a link carrying a historical domain number exists in a new IGP domain obtained through division.

The historical domain number means a domain number used by the link before the IGP domain division at this time. For example, in FIG. 5, it is assumed that before the link 504D-504F is deleted, the IGP domain 1 includes the links 504A-502A, 504A-504B, and 504B-502B, the IGP domain 2 includes links 502A-504C, 504C-504D, 504D-504F, 504F-504E, and 504E-502B, and the IGP domain 3 includes links 502B-504E, 504E-504F, 504F-504G, 504G-504H, 504H-502C, 504F-504I, and 504I-504J. Herein, 1, 2, and 3 are domain numbers. After the link 504D-504F is deleted, the method 600 shown in FIG. 6 may be applied to perform IGP domain division for access site links in the IGP domain 2 and the IGP domain 3 again, to obtain new IGP domains 512A and 512B. When access site links in the original IGP domain 2 and the original IGP domain 3 are allocated to new IGP domains, domain numbers need to be reallocated, and the domain number 2 and/or the domain number 3 previously used by these links are/is historical domain numbers of the links.

A correspondence between an IGP domain and a domain number may be stored in a database. A network device may search records in the database to determine whether a link carrying a historical domain number exists in a new IGP domain obtained through division.

For an IGP domain that includes a link carrying a historical domain number, the historical domain number in the new IGP domain obtained through division is preferentially used as an idle number for reallocation. In a process of reallocating the historical domain number that is in the new IGP domain obtained through division and that is used as the idle number, reallocation may be performed based on a quantity of links whose domain numbers need to be adjusted. This process is described in detail in steps 904-908.

For an IGP domain that includes no link carrying a historical domain number, step 910 is performed to directly allocate a new domain number. FIG. 4 shows an initially constructed network topology. Before the IGP domain division at this time, all links do not include domain configuration information. Therefore, a new domain number is allocated to the IGP domain obtained through division at this time.

Step 904: Divide the new IGP domain obtained through division into at least one association domain set.

When the association domain set is obtained through division, IGP domains with an association relationship in new IGP domains obtained through division are added to an association domain set. If one IGP domain and another IGP domain include at least one same idle domain number, the two IGP domains are considered to have an association relationship therebetween. In other words, a necessary and sufficient condition on which an IGP domain belongs to an association domain set is that the IGP domain has at least one same idle domain number as one IGP domain in the association domain set.

Similarly, for example, in FIG. 5, historical domain numbers of the links 502A-504C and 504 C-504D are 2, that is, the new IGP domain 512A formed by the links 502A-504C and 504C-504D includes an idle domain number 2. Historical domain numbers of the links 502B-504E and 504E-504F are 2 and 3, and historical domain numbers of the links 504F-504G, 504G-504H, 504H-502C, 504F-504I, and 504I-504J are 3. In other words, the new IGP domain 512B formed by the links 502B-504E, 504E-504F, 504F-504G, 504G-504H, 504H-502C, 504F-504I, and 504I-504J includes idle domain numbers 2 and 3. Because both the IGP domains 512A and 512B include the idle domain number 2, the two IGP domains have an association relationship therebetween, and should be allocated to an association domain set 514.

Step 906: Obtain an idle domain number set of the association domain set.

The idle domain number set of the association domain set is a set of idle domain numbers included in each IGP domain in the association domain set. For example, an idle domain number set of the association domain set 514 in FIG. 5 is {2, 3}.

Step 908: Reallocate an idle domain number in the idle domain number set of the association domain set to an IGP domain in the association domain set. When the idle domain numbers in the idle domain number set are insufficient for allocation, a new domain number is allocated to an IGP domain to which no idle domain number is allocated in the association domain set.

It is assumed that a quantity of elements in the association domain set is M, and a quantity of elements in the idle domain number set of the association domain set is P. Herein, M and P are integers greater than or equal to 1, an element in the association domain set is an IGP domain, and an element in the idle domain number set is an idle domain number.

When M>P, P IGP domains are selected from the M IGP domains, P idle domain numbers are allocated to these P IGP domains, and new domain numbers are allocated to remaining M-P domains.

When M<P, M domain numbers are selected from the P domain numbers and allocated to the M IGP domains in the association domain set.

When M=P, processing may be performed in the manner used when M>P, or may be performed in the manner used when M<P. In this embodiment, an example in which the processing is performed in the manner used when M>P is used.

In step 908, when the idle domain number is selected from the idle domain number set of the association domain set and reallocated to the IGP domain in the association domain set, the idle domain number in the idle domain number set may be allocated based on a quantity of links whose domain numbers need to be adjusted.

In a specific embodiment, the quantity of links whose domain numbers need to be adjusted may be a quantity of links whose domain numbers need to be adjusted in the association domain set.

If M and P are very large, it is very complex to calculate the quantity of links whose domain numbers need to be adjusted in the association domain set. In another example embodiment, a manner in which a quantity of links whose domain numbers are to be modified in each IGP domain is minimized may be selected based on each IGP domain in the association domain set, to perform allocation.

In another specific embodiment, the foregoing two manners may also be combined for processing. The following uses an example in which the two manners are combined, to describe the process in step 908 in which the idle domain number in the idle domain number set of the association domain set is reallocated to the IGP domain in the association domain set based on the quantity of links whose domain numbers need to be adjusted. The process includes the following steps:

> i. Determine a quantity of allocation manners based on the quantity of elements in the association domain set and the quantity of elements in the idle domain number set.
>
> When M≥P, there are $A_M^P$ allocation manners, because there are $A_M^P$ selection manners for selecting P IGP domains from M IGP domains.
>
> When M<P, there are $A_P^M$ allocation manners, because there are $A_P^M$ selection manners for selecting M domain numbers from P domain manners.
>
> ii. When the quantity of allocation manners is smaller than a preset allocation manner threshold Q, select a manner in which the quantity of links whose domain numbers are to be modified in the association domain set is minimized, to perform reallocation; or when the quantity of allocation manners is greater than or equal to a preset allocation manner threshold Q, select, based on each IGP domain in the association domain set, a manner in which the quantity of links whose domain numbers are to be modified in each IGP domain is minimized, to perform reallocation.

The allocation manner threshold Q may be preset based on a network status. The value is set, so that a more efficient allocation manner can be selected based on different network scales.

In an example of FIG. 5, it is obtained in step 906 that the association domain set 514 in FIG. 5 includes the IGP domains 512A and 512B, and the idle domain set of the association domain set 514 is {2, 3}. In this case, the quantity M of elements in the association domain set 514 is equal to 2, and the quantity P of elements in the idle domain set is equal to 2. Therefore, there are two allocation manners.

Manner 1: Allocate the domain number 2 to the IGP domain 512A, and allocate the domain number 3 to the IGP domain 512B.

Manner 2: Allocate the domain number 3 to the IGP domain 512A, and allocate the domain number 2 to the IGP domain 512B.

It is assumed that a value of Q is 10, and the quantity of allocation manners is 2 smaller than the value of Q: 10, a manner in which the quantity of links whose domain numbers are to be modified in the association domain set 514 is minimized is selected for reallocation. If the allocation is performed in Manner 1, the links that need to be adjusted are 502B-504E and 504E-504F. If the allocation is performed in Manner 2, the links that need to be adjusted are 502A-504C, 504C-504D, 502B-504E, 504E-504F, 504F-504G, 504G-504H, 504H-502C, and 504F-504I, and 504I-504J. Therefore, Manner 1 is selected for allocation.

The following describes construction of the evaluation function in the embodiment shown in FIG. 8. The evaluation function is used to indicate some division policies other than the IGP domain division requirements. A user such as an operator may adjust a final division result by adjusting a calculation algorithm of the evaluation function, to meet different service requirements.

The evaluation function used in step 806 in FIG. 8 is used as an example. In the evaluation function F=100*Dist(access ring)+10*Redudancy+Size(access ring), a weight of Dist(access ring) is the largest, a weight of Redudancy is the second largest, and a weight of Size(access ring) is the smallest. It indicates that when the evaluation function F is constructed, a shortest access site path distance between ASGs at two ends of an access ring is used as a first priority factor, a minimized quantity of redundant links is used as a second priority factor, and a smallest access ring is used as a third priority factor.

In another specific embodiment, an evaluation function may be further constructed as F'=100*Redudancy+10*Dist(access ring)+Size(access ring). In the evaluation function F', a weight of Redudancy is the largest, a weight of Dist(access ring) is the second largest, and a weight of Size(access ring) is the smallest. It indicates that when the evaluation function F' is constructed, a minimized quantity of redundant links is used as a first priority factor, a shortest access site path distance between ASGs at two ends of an access ring is used as a second priority factor, and a smallest access ring is used as a third priority factor.

FIG. 10 and FIG. 11 show different division results generated by using the two evaluation functions in a same topology. FIG. 10 is a division result generated by using the evaluation function F in step 806, and FIG. 11 is a division result generated by using the evaluation function F' in step 806.

In other words, a user (for example, an operator) may select a parameter and a weight suitable for a service requirement of the user, to construct an evaluation function; and then apply the evaluation function to IGP domain division, to achieve an objective of obtaining IGP domains through division that meet different service requirements of different users.

All the foregoing method embodiments may be implemented in an apparatus for obtaining an IGP domain through division. The apparatus may be a network device. The network device may exist independently in a network, or may be coupled to another network element in a network (for example, coupled to a centralized controller or an ASG node or a CSG node in an IP RAN network).

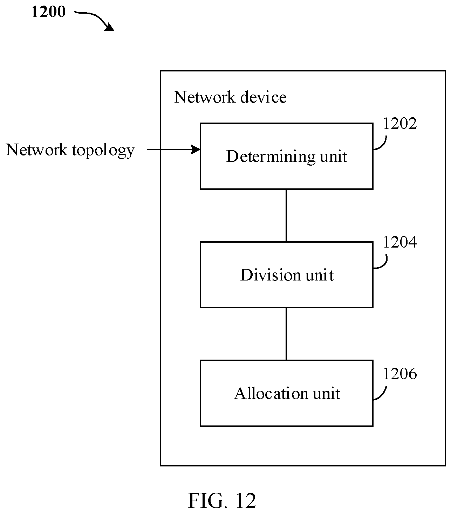

FIG. 12 is a possible schematic structural diagram of a network device 1200 for implementing IPG area division.

As shown in FIG. 12, the network device 1200 may include a determining unit 1202, a division unit 1204, and an allocation unit 1206.

The determining unit 1202 is configured to determine a changed access site subgraph. For specific implementation of a function of the determining unit 1202, refer to step 602 in FIG. 6 and the part of the method embodiment shown in FIG. 7. Details are not described herein again.

The division unit 1204 is configured to: allocate each link in the changed access site subgraph to an atomic domain; and obtain an IGP domain based on the atomic domain. For specific implementation of a function of the division unit 1204, refer to step 604 in FIG. 6 and the part of the method embodiment shown in FIG. 8. Details are not described herein again.

The allocation unit 1206 is configured to: after the division unit performs the IGP domain division, allocate a domain number to a new IGP domain obtained through division; and in a process of allocating a domain number, for an IGP domain that includes a link carrying a historical domain number, preferentially use the historical domain number in the new IGP domain obtained through division as an idle number for reallocation; for an IGP domain that does not include a link carrying a historical domain number, directly allocate a new domain number to the IGP domain. For specific implementation of a function of the allocation unit 1206, refer to step 606 in FIG. 6 and the part of the method embodiment shown in FIG. 9. Details are not described herein again.

In a specific embodiment, a function of the network device 1200 may be implemented by the network element 200 shown in FIG. 2. For example, functions of the determining unit 1202, the division unit 1204, and the allocation unit 1206 in the network device 1200 may be implemented by the network division module 260 in the network element 200.

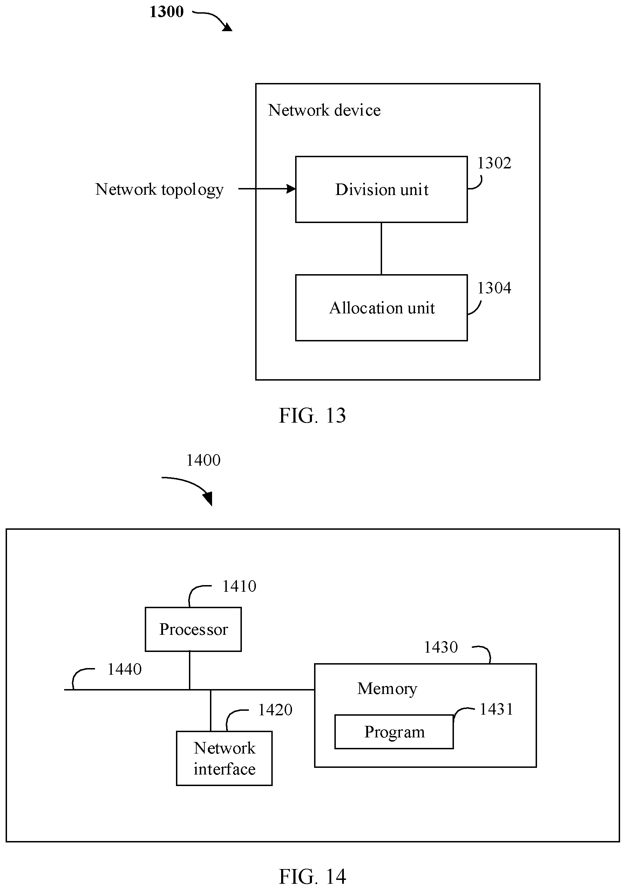

FIG. 13 is another possible schematic structural diagram of a network device 1300 for implementing IPG area division.

As shown in FIG. 13, the network device 1300 may include a division unit 1302 and an allocation unit 1304.

The division unit 1302 is configured to perform IGP domain division in a changed network based on a network topology. For specific implementation of a function of the division unit 1302, refer to step 602 and step 604 in FIG. 6 and the part of the method embodiments shown in FIG. 7 and FIG. 8. Details are not described herein again.

The allocation unit 1304 is configured to: after the division unit performs the IGP domain division, allocate a domain number to a new IGP domain obtained through division; and in a process of allocating a domain number, for an IGP domain that includes a link carrying a historical domain number, preferentially use the historical domain number in the new IGP domain obtained through division as an idle number for reallocation; for an IGP domain that does not include a link carrying a historical domain number, directly allocate a new domain number to the IGP domain. For specific implementation of a function of the allocation unit 1304, refer to step 606 in FIG. 6 and the part of the method embodiment shown in FIG. 9. Details are not described herein again.

An embodiment of this application further provides a computer storage medium, configured to store a computer software instruction used by the network device shown in FIG. 12 or FIG. 13. The computer storage medium includes a program designed for performing the method embodiment shown in FIG. 6, FIG. 7, FIG. 8, or FIG. 9, and IGP domain division may be implemented by executing the stored program.

FIG. 14 is another possible schematic structural diagram of a network device 1300 for implementing IPG area division.

The network device includes at least one processor 1410 (for example, a CPU), at least one network interface 1420 or another communications interface, a memory 1430, and at least one communications bus 1440 that is configured to implement communication connection between these apparatuses. The processor 1410 is configured to execute a program 1431 stored in the memory 1430. The memory 1430 may include a high-speed random access memory (RAM Random Access Memory), or may include a nonvolatile memory (non-volatile memory), for example, at least one magnetic disk memory. The at least one network interface 1420 (which may be wired or wireless) is used to implement communication connection between the data query apparatus and at least one another network elements. The Internet, a wide area network, a local network, a metropolitan area network, or the like may be used.

The processor 1410 is configured to: perform IGP domain division in a changed network based on a network topology; after the IGP domain division, allocate a domain number to a new IGP domain obtained through division; and in a process of allocating a domain number, for an IGP domain that includes a link carrying a historical domain number, preferentially use the historical domain number in the new IGP domain obtained through division as an idle number for reallocation; for an IGP domain that does not include a link carrying a historical domain number, directly allocate a new domain number to the IGP domain. For specific implementation of the IPG domain division, refer to step 602 and step 604 in FIG. 6 and the method embodiments shown in FIG. 7 and FIG. 8. For specific implementation of domain number allocation, refer to step 606 in FIG. 6 and the method embodiment shown in FIG. 9. Details are not described herein again.

It should be noted that the foregoing embodiments are described by using an IP RAN network and a network element in the IP RAN network as an example. The solutions in the embodiments of this application may be further applied to another type of bearer network. For an implementation process of the solutions, refer to implementation in the IP RAN network, for example, in a PTN network.

According to the solutions used in the embodiments of this application, a subgraph is used as a basic computing unit. When the network topology changes, only the subgraph within a change range may be included in a range of IGP redivision, thereby reducing complexity of obtaining an IGP domain through redivision in a process of network expansion or adjustment, and implementing automatic domain division in a network change.

In an example embodiment, in the embodiments of this application, the evaluation function is introduced for calculation for atomic domain division. In this way, the user may adjust a final division result by adjusting a calculation algorithm of the evaluation function, to adapt to different service requirements, thereby improving flexibility of IGP domain division.

Although the present invention is described with reference to the embodiments, in a process of implementing the present invention that claims protection, a person skilled in the art may understand and implement another variation of the disclosed embodiments by viewing the accompanying drawings, disclosed content, and the accompanying claims. In the claims, "comprising" does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

A person skilled in the art should understand that the embodiments of this application may be provided as a method, an apparatus (device), or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code. The computer program is stored/distributed in a proper medium and is provided as or used as a part of the hardware together with another hardware, or may also use another allocation form, for example, by using the Internet or another wired or wireless telecommunications system.

This application is described with reference to the flowcharts and/or block diagrams of the method, the apparatus (device), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although the present invention is described with reference to specific features and the embodiments thereof, obviously, various modifications and combinations may be made to them without departing from the spirit and scope of the present invention. Correspondingly, the specification and accompanying drawings are merely example description of the present invention defined by the accompanying claims, and is considered as any of or all modifications, variations, combinations or equivalents that cover the scope of the present invention. Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

**Claims**

1. A method for obtaining an interior gateway protocol IGP domain through division in a network, wherein the network comprises an access site link and a non-access site link, the access site link comprises a link between access site devices and a link between an access site device and an aggregation site device, the non-access site link comprises a link other than the access site link in the network, and the method comprises:

   determining, by a network device, a changed access site subgraph based on a change of a network topology of the network, wherein the access site subgraph is one or more connection diagrams formed after the non-access site link is removed from the network topology; and obtaining an IGP domain through division based on a link in the changed access site subgraph.

2. The method according to claim 1, wherein the determining, by a network device, a changed access site subgraph based on a change of a network topology of the network comprises:

   determining, by the network device, a changed access site device based on the change of the network topology; and obtaining an access site subgraph in which the changed access site device is located, and determining, as the changed access site subgraph, the access site subgraph in which the changed access site device is located.

3. The method according to claim 1 or 2, wherein the obtaining an IGP domain through division based on a link in the changed access site subgraph comprises: searching the changed access site subgraph for a valid access ring and a chain that does not belong to any access ring, wherein the access ring is a path whose start point and end point in the access site subgraph are both an aggregation site device, the valid access ring is an access ring whose link quantity or node quantity does not exceed a limited threshold N of the IGP domain, and N is an integer greater than 1;
allocating a link in the valid access ring to an atomic domain based on a ring in which the link is located; allocating a link in the chain that does not belong to any access ring, to an atomic domain based on a chain in which the link is located; and
obtaining the IGP domain based on the atomic domain, wherein the atomic domain is a minimum unit for forming an IGP domain.

4. The method according to claim 3, wherein the performing allocation to an atomic domain based on a ring in which the link is located comprises:
obtaining a union set of links in all valid access rings in the changed access site subgraph, and traversing the links in the union set; and if the link does not belong to any atomic domain, calculating, by using a pre-constructed evaluation function, a valid access ring comprising the link, selecting, as an atomic domain based on a calculation result of the evaluation function, one valid access ring comprising the link, and adding the atomic domain to an atomic domain set; or if the link has been added to at least one atomic domain, continuing to traverse a next link until the atomic domain set comprises all the links in the union set, wherein the atomic domain set is a set of atomic domains.

5. The method according to claim 4, wherein the selecting, as an atomic domain based on a calculation result of the evaluation function, one valid access ring comprising the link, and adding the atomic domain to an atomic domain set comprises:
selecting, as the atomic domain based on the calculation result of the evaluation function, a valid access ring that has a minimum or maximum value of the evaluation function, and adding the atomic domain to the atomic domain set.

6. The method according to claim 4 or 5, further comprising: constructing or adjusting the evaluation function in advance based on a division requirement of a user.

7. The method according to any one of claims 4 to 6, wherein if the chain that does not belong to any access ring is an aggregation site device chain, and the aggregation site device chain is a chain comprising an aggregation site device, performing allocation to the atomic domain based on a type of the chain in which the link is located comprises: directly using the aggregation site device chain as an atomic domain.

8. The method according to claim 7, wherein if the chain that does not belong to any access ring is an access site device chain, and the access site device chain is a chain that does not comprise an aggregation site device, performing allocation to the atomic domain based on the type of the chain in which the link is located comprises: searching the atomic domain set for a valid access ring intersected with the access site device chain; and if the valid access ring intersected with the access site device chain is found, and a total quantity of links of the found valid access ring and the access site device chain does not exceed a link threshold N of the IGP domain, forming the atomic domain by using the access site device chain and the found valid access ring; or if no valid access ring intersected with the access site device chain is found, or a total quantity of links of the found valid access ring and the access site device chain exceeds a link threshold N of the IGP domain, forming the atomic domain by using the access site device chain and a path from a head node of the access site device chain to a nearest aggregation site device through the access site link.

9. The method according to any one of claims 4 to 8, wherein the obtaining the IGP domain based on the atomic domain comprises: based on the requirement for the IGP domain division, using one atomic domain as one IGP domain, or combining, to one IGP domain, at least two atomic domains whose total quantity of links does not exceed the link threshold N, or combining, to one IGP domain, at least two atomic domains whose total quantity of nodes does not exceed a node threshold N.

10. The method according to any one of claims 1 to 9, further comprising: after IGP domain division, allocating a domain number to a new IGP domain obtained through division; and in a process of allocating a domain number, for an IGP domain that comprises a link carrying a historical domain number, preferentially using the historical domain number in the new IGP domain obtained through division as an idle number for reallocation; for an IGP domain that does not comprise a link carrying a historical domain number, directly allocating a new domain number to the IGP domain.

11. The method according to claim 10, wherein in a process of reallocating the historical domain number that is in the new IGP domain obtained through division and that is used as the idle number, reallocation is performed based on a quantity of links whose domain numbers need to be adjusted.

12. The method according to claim 10 or 11, wherein the preferentially using the historical domain number in the new IGP domain obtained through division as an idle number for reallocation comprises:

dividing, into at least one association domain set, the new IGP domain obtained through division, wherein IGP domains with an association relationship are added to an association domain set, and the association relationship is that one IGP domain and another IGP domain comprise at least one same idle domain number; obtaining an idle domain number set of the association domain set; and reallocating, to an IGP domain in the association domain set based on the quantity of links whose domain numbers need to be adjusted, an idle domain number from the idle domain number set of the association domain set; and when the idle domain numbers in the idle domain number set are insufficient for allocation, allocating a new domain number to an IGP domain to which no idle domain number is allocated in the association domain set.

13. The method according to claim 12, wherein the reallocating, to an IGP domain in the association domain set based on the quantity of links whose domain numbers need to be adjusted, an idle domain number from the idle domain number set of the association domain set comprises:

determining a quantity of allocation manners based on a quantity of elements in the association domain set and a quantity of elements in the idle domain number set; and when the quantity of allocation manners is less than a preset allocation manner threshold Q, selecting a manner in which the quantity of links whose domain numbers are to be modified in the association domain set is minimized, to perform allocation; or when the quantity of allocation manners is greater than or equal to a preset allocation manner threshold Q, selecting, based on each IGP domain in the association domain set, a manner in which a quantity of links whose domain numbers are to be modified in each IGP domain is minimized, to perform allocation, wherein Q is an integer greater than 1.

14. The method according to any one of claims 1 to 13, wherein the access site device is a cell site gateway CSG, and the aggregation site device is an aggregation site gateway ASG.

15. A method for obtaining an interior gateway protocol IGP domain through division in a network, wherein the method comprises:

performing IGP domain division in a changed network based on a network topology; and allocating a domain number to a new IGP domain obtained through division, wherein the allocating a domain number to a new IGP domain obtained through division comprises: for an IGP domain that comprises a link carrying a historical domain number, preferentially using the historical domain number in the new IGP domain obtained through division as an idle number for reallocation; for an IGP domain that does not comprise a link carrying a historical domain number, directly allocating a new domain number to the IGP domain.

16. The method according to claim 15, wherein the using the historical domain number in the new IGP domain obtained through division as an idle number for reallocation comprises: reallocating, based on a quantity of links whose domain numbers need to be adjusted, the historical domain number in the new IGP domain obtained through division.

17. The method according to claim 15 or 16, wherein the preferentially using the historical domain number in the new IGP domain obtained through division as an idle number for reallocation comprises:

dividing, into at least one association domain set, the new IGP domain obtained through division, wherein IGP domains with an association relationship are added to an association domain set, and the association relationship is that one IGP domain and another IGP domain comprise at least one same idle domain number; obtaining an idle domain number set of the association domain set; and reallocating, to an IGP domain in the association domain set based on the quantity of links whose domain numbers need to be adjusted, an idle domain number from the idle domain number set of the association domain set; and when the idle domain numbers in the idle domain number set are insufficient for allocation, allocating a new domain number to an IGP domain to which no idle domain number is allocated in the association domain set.

18. The method according to claim 17, wherein the reallocating, to an IGP domain in the association domain set based on the quantity of links whose domain numbers need to be adjusted, an idle domain number from the idle domain number set of the association domain set comprises:

determining a quantity of allocation manners based on a quantity of elements in the association domain set and a quantity of elements in the idle domain number set; and when the quantity of allocation manners is less than a preset allocation manner threshold Q, selecting a manner in which the quantity of links whose domain numbers are to be modified in the association domain set is minimized, to perform reallocation; or when the quantity of allocation manners is greater than or equal to a preset allocation manner threshold Q, selecting, based on each IGP domain in the association domain set, a manner in which a quantity of links whose domain numbers are to be modified in each IGP domain is minimized, to perform reallocation, wherein Q is an integer greater than 1.

19. An apparatus for obtaining an interior gateway protocol IGP domain through division in a network, wherein the network comprises an access site link and a non-access site link, the access site link comprises a link between access site devices and a link between an access site device and an aggregation site device, the non-access site link comprises a link other than the access site link in the network, and the apparatus comprises:

a determining unit, configured to determine a changed access site subgraph, wherein the access site subgraph is one or more connection diagrams formed after the non-access site link is removed from a network topology; and a division unit, configured to perform IGP domain division based on a link in the changed access site subgraph.

20. The apparatus according to claim 19, wherein when the access site device is a cell site gateway CSG, the determining unit is specifically configured to: determine a changed CSG node based on a change of the network topology of the network; obtain an access site subgraph in which the changed CSG is located; and determine, as the changed access site subgraph, the access site subgraph in which the changed CSG node is located.

21. The apparatus according to claim 20, wherein the aggregation site device is an aggregation site gateway ASG, and that the division unit performs IGP domain division based on the link in the changed access site subgraph comprises: the division unit is configured to: search the changed access site subgraph for a valid access ring and a chain that does not belong to any access ring; allocate a link in the valid access ring to an atomic domain based on a ring in which the link is located; allocate a link in the chain that does not belong to any access ring, to an atomic domain based on a chain in which the link is located, wherein the access ring is a path whose start point and end point are both an ASG, the valid access ring is an access ring whose link quantity does not exceed a limited threshold N of the IGP domain, and N is an integer greater than 1; and obtain the IGP domain based on the atomic domain, wherein the atomic domain is a minimum unit for forming an IGP domain.

22. The apparatus according to claim 21, wherein that the division unit performs allocation to the atomic domain based on the ring in which the link is located specifically comprises:
the division unit obtains a union set of links in all valid access rings in the changed access site subgraph, and traverses the links in the union set; and if the link does not belong to any atomic domain, calculates, by using a pre-constructed evaluation function, a valid access ring comprising the link, selects, as an atomic domain based on a calculation result of the evaluation function, one valid access ring comprising the link, and adds the atomic domain to an atomic domain set; or if the link has been added to at least one atomic domain, continues to traverse a next link until the atomic domain set comprises all the links in the union set, wherein the atomic domain set is a set of atomic domains.

23. The apparatus according to claim 22, wherein that the division unit selects, as the atomic domain based on the calculation result of the evaluation function, the valid access ring comprising the link, and adds the atomic domain to the atomic domain set specifically comprises:
the division unit selects, as the atomic domain based on the calculation result of the evaluation function, a valid access ring that has a minimum or maximum value of the evaluation function, and adds the atomic domain to the atomic domain set.

24. The apparatus according to claim 22 or 23, wherein if the chain that does not belong to any access ring is an aggregation site device chain, and the aggregation site device chain is a chain comprising an aggregation site device, that the division unit is configured to perform allocation to the atomic domain based on a type of the chain in which the link is located specifically comprises:
the division unit directly uses the ASG chain as an atomic domain.

25. The apparatus according to claim 24, wherein if the chain that does not belong to any access ring is an access site device chain, and the access site device chain is a chain that does not comprise an aggregation site device, that the division unit is configured to perform allocation to the atomic domain based on the type of the chain on which the link is located specifically comprises:
the division unit searches the atomic domain set for a valid access ring intersected with the access site device chain; and if the valid access ring intersected with the access site device chain is found, and a total quantity of links of the found valid access ring and the access site device chain does not exceed a link threshold N of the IGP domain, forms the atomic domain by using the access site device chain and the found valid access ring; or if no valid access ring intersected with the access site device chain is found, or a total quantity of links of the found valid access ring and the access site device chain exceeds a link threshold N of the IGP domain, forms the atomic domain by using the access site device chain and a path from a head node of the access site device chain to a nearest ASG through the access site link, wherein N is an integer greater than 1.

26. The apparatus according to any one of claims 22 to 25, wherein that the division unit is configured to obtain the IGP domain based on the atomic domain specifically comprises:
the division unit is configured to: based on a requirement for the IGP domain division, use one atomic domain as one IGP domain, or combine, to one IGP domain, at least two atomic domains whose total quantity of links does not exceed the link threshold N.

27. The apparatus according to any one of claims 19 to 25, further comprising:
an allocation unit, configured to: after the division unit performs the IGP domain division, allocate a domain number to a new IGP domain obtained through division, wherein the allocating a domain number to a new IGP domain obtained through division comprises: for an IGP domain that comprises a link carrying a historical domain number, preferentially using the historical domain number in the new IGP domain obtained through division as an idle number for reallocation; for an IGP domain that does not comprise a link carrying a historical domain number, directly allocating a new domain number to the IGP domain.

28. The apparatus according to claim 27, wherein in a process in which the allocation unit reallocates the historical domain number that is in the new IGP domain obtained through division and that is used as the idle number, reallocation is performed based on a quantity of links whose domain numbers need to be adjusted.

29. The apparatus according to claim 27 or 28, wherein that the allocation unit is configured to preferentially use, as the idle number for reallocation, the historical domain number in the new IGP domain obtained through division specifically comprises:

the allocation unit is configured to: divide, into at least one association domain set, the new IGP domain obtained through division, wherein IGP domains with an association relationship are added to an association domain set; obtain an idle domain number set of the association domain set; reallocate, to an IGP domain in the association domain set based on the quantity of links whose domain numbers need to be adjusted, an idle domain number from the idle domain number set of the association domain set; and when the idle domain numbers in the idle domain number set are insufficient for allocation, allocate a new domain number to an IGP domain to which no idle domain number is allocated in the association domain set, wherein the association relationship is that one IGP domain and another IGP domain comprise at least one same idle domain number.

30. The apparatus according to claim 29, wherein that the allocation unit reallocates, to the IGP domain in the association domain set based on the quantity of links whose domain numbers need to be adjusted, the idle domain number from the idle domain number set of the association domain set specifically comprises:

the allocation unit determines a quantity of allocation manners based on a quantity of elements in the association domain set and a quantity of elements in the idle domain number set; and when the quantity of allocation manners is less than a preset allocation manner threshold Q, selects a manner in which the quantity of links whose domain numbers are to be modified in the association domain set is minimized, to perform allocation; or when the quantity of allocation manners is greater than or equal to a preset allocation manner threshold Q, selects, based on each IGP domain in the association domain set, a manner in which a quantity of links whose domain numbers are to be modified in each IGP domain is minimized, to perform allocation, wherein Q is an integer greater than 1.

31. An apparatus for obtaining an interior gateway protocol IGP domain through division in a network, wherein the apparatus comprises:

a division unit, configured to perform IGP domain division in a changed network based on a network topology; and
an allocation unit, configured to: after the division unit performs the IGP domain division, allocate a domain number to a new IGP domain obtained through division, wherein the allocating a domain number to a new IGP domain obtained through division comprises: for an IGP domain that comprises a link carrying a historical domain number, preferentially using the historical domain number in the new IGP domain obtained through division as an idle number for reallocation; for an IGP domain that does not comprise a link carrying a historical domain number, directly allocating a new domain number to the IGP domain.

32. The apparatus according to claim 31, wherein in a process in which the allocation unit reallocates the historical domain number that is in the new IGP domain obtained through division and that is used as the idle number, reallocation is performed based on a quantity of links whose domain numbers need to be adjusted.

33. The apparatus according to claim 31 or 32, wherein that the allocation unit is configured to preferentially use, as the idle number for reallocation, the historical domain number in the new IGP domain obtained through division specifically comprises:

the allocation unit is configured to: divide, into at least one association domain set, the new IGP domain obtained through division, wherein IGP domains with an association relationship are added to an association domain set; obtain an idle domain number set of the association domain set; reallocate, to an IGP domain in the association domain set based on the quantity of links whose domain numbers need to be adjusted, an idle domain number from the idle domain number set of the association domain set; and when the idle domain numbers in the idle domain number set are insufficient for allocation, allocate a new domain number to an IGP domain to which no idle domain number is allocated in the association domain set, wherein the association relationship is that one IGP domain and another IGP domain comprise at least one same idle domain number.

34. The apparatus according to claim 33, wherein that the allocation unit reallocates, to the IGP domain in the association domain set based on the quantity of links whose domain numbers need to be adjusted, the idle domain number from the idle domain number set of the association domain set specifically comprises:

the allocation unit determines a quantity of allocation manners based on a quantity of elements in the association domain set and a quantity of elements in the idle domain number set; and when the quantity of allocation manners is less than a preset allocation manner threshold Q, selects a manner in which the quantity of links whose domain numbers are to be modified in the association domain set is minimized, to perform reallocation; or when the quantity of allocation manners is greater than or equal to a preset allocation manner threshold Q, selects, based on each IGP domain in the association domain set, a manner in which a quantity of links whose domain numbers are to be modified in each IGP domain is minimized, to perform reallocation, wherein Q is an integer greater than 1.

35. A computer readable storage medium, comprising an instruction, wherein when the instruction is run on a computer, the computer is enabled to perform the method according to any one of claims 1 to 18.

FIG. 1

200

Network element

210

Downlink port

Tx/Rx

220

Processor

230

Tx/Rx

220

240

Uplink port

Memory

250

Network division module

260

FIG. 2

FIG. 3

FIG. 4

FIG. 5

600

```
┌─────────────────────────────────────────────┐
│  Determine a changed access site subgraph,    │ ⌐── 602
│  to obtain a set of changed access site       │
│  subgraphs                                     │
└─────────────────────────────────────────────┘
                      │
                      ▼
┌─────────────────────────────────────────────┐
│  Allocate each link in the changed access      │ ⌐── 604
│  site subgraph to an atomic domain, and        │
│  obtain an IGP area based on the atomic        │
│  domain                                        │
└─────────────────────────────────────────────┘
                      │
                      ▼
┌─────────────────────────────────────────────┐
│  Allocate a domain number to the IGP area      │ ⌐── 606
└─────────────────────────────────────────────┘
```

FIG. 6

700

Network topology

Determine a changed CSG node, to obtain a set of changed CSG nodes — 702

Determine a changed access site subgraph — 704

FIG. 7

*800* ⟍

Change an access site subgraph

┌─────────────────────────────────────────────┐
│ Search the changed access site subgraph for a valid │  ⟍ 802
│ access ring                                   │
└─────────────────────────────────────────────┘

┌─────────────────────────────────────────────┐
│ Search the changed access site subgraph for a chain │  ⟍ 804
│ that does not belong to any access ring       │
└─────────────────────────────────────────────┘

┌─────────────────────────────────────────────┐
│ Allocate each link in the changed access site │  ⟍ 806
│ subgraph to an atomic domain                  │
└─────────────────────────────────────────────┘

FIG. 8

**900**

Determine whether a link carrying a historical domain number exists in a new IGP area obtained through division ⌐ 902

No

Yes

Divide the new IGP area obtained through division into at least one association domain set ⌐ 904

Directly allocate a new domain number ⌐ 910

Obtain an idle domain number set of the association domain set ⌐ 906

Select an idle domain number from the idle domain number set of the association domain set, reallocate the idle domain number to an IGP area in the association domain set, and when the idle domain numbers in the idle domain number set are insufficient for allocation, allocate a new domain number to an IGP area to which no idle domain number is allocated in the association domain set ⌐ 908

FIG. 9

1000

FIG. 10

1100

FIG. 11

**1200**

Network topology →

Network device

Determining unit — 1202

Division unit — 1204

Allocation unit — 1206

FIG. 12

1300 —

Network device

Network topology → Division unit    1302

Allocation unit    1304

FIG. 13

1400

1410

Processor

1440

1430

Memory

1420

1431

Network interface

Program

FIG. 14

## INTERNATIONAL SEARCH REPORT

| International application No. |
|---|
| **PCT/CN2019/102985** |

**A.    CLASSIFICATION OF SUBJECT MATTER**

H04L 12/24(2006.01)i

According to International Patent Classification (IPC) or to both national classification and IPC

**B.    FIELDS SEARCHED**

Minimum documentation searched (classification system followed by classification symbols)

H04L; H04Q

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE: 内部网关协议, 分, 拆, 割, 生成, 形成, 产生, 区, 域, 网, 改, 变, 更新, 号, 标识, 标识, 编号, 编码, 接入, 汇聚, 图, 拓扑, IGP, IS-IS, RIP, EIGRP, OSPF, dived+, separat+, domain?, region?, area?, zone?, network?, ??RAN, chang+, vary+, updat+, ID, number, CSG, ASG, graph, topolog+

**C.    DOCUMENTS CONSIDERED TO BE RELEVANT**

| Category* | Citation of document, with indication, where appropriate, of the relevant passages | Relevant to claim No. |
|---|---|---|
| A | CN 106576065 A (HUAWEI TECHNOLOGIES CO., LTD.) 19 April 2017 (2017-04-19) claims 1-12 | 1-35 |
| A | US 8611359 B1 (JUNIPER NETWORK, INC.) 17 December 2013 (2013-12-17) entire document | 1-35 |
| A | 杨广铭等 (YANG, Guangming et al.). " 《LTE 海量基站业务承载网络优化方案分析》 (Non-official translation: Analysis of LTE Massive Base Station Service Bearer Network Optimization Scheme)" 电信科学 *(TELECOMMUNICATION SCIENCE),* Vol. 29, No. Z1, 20 August 2013 (2013-08-20), entire document | 1-35 |
| A | ETSI. "Next Generation Protocols (NGP); Self-Organizing Control and Management Planes" *ETSI GS NGP 002 V1.1.1,* 31 May 2017 (2017-05-31), entire document | 1-35 |

| ☐ Further documents are listed in the continuation of Box C. | ☑ See patent family annex. |
|---|---|

\*    Special categories of cited documents:
"A"    document defining the general state of the art which is not considered to be of particular relevance
"D"    document cited by the applicant in the international application
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **28 October 2019** | **03 December 2019** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2019/102985**

| Patent document cited in search report | Publication date (day/month/year) | Patent family member(s) | Publication date (day/month/year) |
|---|---|---|---|
| CN 106576065 A | 19 April 2017 | WO 2016026452 A1 | 25 February 2016 |
| | | US 2016057629 A1 | 25 February 2016 |
| | | EP 3180896 A1 | 21 June 2017 |
| US 8611359 B1 | 17 December 2013 | None | |

Form PCT/ISA/210 (patent family annex) (January 2015)

**REFERENCES CITED IN THE DESCRIPTION**

**Patent documents cited in the description**

- CN 201811012109